# EUROPEAN PATENT APPLICATION

(11) **EP 1 089 161 A2**
(43) Date of publication of application: **04.04.2001**
(21) Application number: 00121114.3
(22) Date of filing: 28.09.2000
(51) Int. Cl.: G06F 3/033

(54) **Object processing apparatus and object attribute changing methods**

(30) Priority: 30.09.1999 JP 27851199
(71) Applicant: Casio Computer Co., Ltd., Shibuya-ku, Tokyo 151-8543 (JP)
(72) Inventor: Hoashi, Hironobu, c/o Casio Computer Co., Ltd., Hamura-shi, Tokyo 205 8555 (JP)
(74) Representative: Grünecker, Kinkeldey, Stockmair & Schwanhäusser Anwaltssozietät

(57) **Abstract**

It is intended to facilitate management and processing of an object such as an image object. An object processing apparatus comprises a display device, display control means for displaying on the display device any particular object and an icon corresponding to control information to change attributes of the object, and a control information adding unit for adding control information to the object by relating the icon to the object on a display screen of the display device (for example, by dragging and dropping a desired icon onto the image object 51). Only by dragging and dropping the icon, control information which changes a displayed state and/or attributes of the object is made related to the object to thereby easily change the displayed state and/or attributes of the object.

## Description

The present invention relates to object processing apparatus and object attribute changing methods, and more particularly to such apparatus and methods which display and/or process image objects such as photographs, illustrations or handwritten characters.

Recently, as information processing apparatus including personal computers have diffused, we have increasing opportunities to touch various "electronic products", whether or not we are in our place of employment. For example, typical electronic products are document files created by editors and/or word processor software, spreadsheet files created by spreadsheet software, database files created by database software, image files created by draw software, and musical sound files created by musical composition software. Furthermore, image files read by scanners or picked up by electronic still cameras, and voice data files which have recorded animal's voice digitally are likewise electronic products.

Such electronic products have the advantages that their reproductions are easy to obtain, edit and process compared to substantial products such as prints. However, they vary in kind and use, and their contents cannot be understood without using predetermined devices. Thus, management of those products is difficult.

Among the electronic products, files mainly containing image data such as photographs, illustrations and/or handwritten characters (hereinafter referred to as "image files"), files mainly containing sound data such as musical sound files and/or voice data files (hereinafter referred to as "sound files") are especially difficult to manage compared to files mainly containing character data such as document files, spreadsheet files and/or database files (hereinafter referred to as "character files".

The reason for this is as follows: it is common to those files that they each have any file name (identified by an appropriate character string representing the contents of the file) given in accordance with a predetermined naming rule recognizable by a file system based on an operating system (OS), that their contents can be inferred from the respective file names as a key and that they can be retrieved from the related recording mediums. Even when software (for example, for word processors) corresponding to a document file is not at hand, the document file can be opened by the editor, significant codes (for example, character codes such as ASCII codes) in the file can be viewed and/or retrieved to understand the contents of the file roughly. In contrast, since the image files and/or sound files do not almost contain such significant codes, the method just described above cannot be used for the same purpose. After all, the contents of the image/sound files cannot be completely understood beyond what is inferred from their file names without using corresponding software.

The document files, image files and sound files can each be defined as "a collection of electronic data having a composition recognizable by an OS file system". According to an object-oriented concept, this definition is an unsubstantial "concept"¹⁾. A "thing" to which a concept is applied is a substantial object (also referred to as an "instance"). Thus, a file recognized by the OS file system is a concept and a file actually present in the recording medium is an object as an actually erasable, processable or reproducable "thing". Thus, in this specification, the term "objects" which include the files will be used.

Note ¹⁾: the concept is defined herein as a person's comprehension or way of thinking produced by his or her conscious activity. A like term is "idea" defined herein as implying a person's personal comprehension or way of thinking whereas the concept is had equally by a plurality of persons. Thus, they are basically different from each other.

Objects mainly including image data (hereinafter referred to as "image objects") are not limited to the image files illustrated above. For example, they include the ones related to other objects (so-called related objects) and collections of data (data arrays on a memory and/or image data stored in fields of a database) which cannot be recognized by the OS file system and hence not handled as files.

As described above, in the conventional techniques, management of electronic products, and especially non-character objects such as image objects is difficult, comprehension of the contents of the objects and/or specifying the position of the objects in a recording medium are difficult. Thus, for example, classification of those objects according to category and deletion of unnecessary objects are not easy.

In order to process an object, dedicated processing software is required. Especially, when a non-character object such as an image object is processed, a person not skilled in handling appropriate processing software cannot process the object as desired.

Objects which are especially difficult to manage and process include the above-mentioned image objects as well as sound objects which contain musical sound files created by composition software and voice data files which contain digitally recorded animals' voices. Problems such as were mentioned above are likewise present not only in those non-character objects, but also in the character objects.

Thus, it is an object of the present invention to facilitate management and processing of an object, in other words, management of the object and a change of its attributes. In the specification, the term "change" is used in a wide sense. The "change of attributes" should also include addition of attributes.

In order to achieve the above object, the present invention provides an object processing apparatus comprising:
a display device;
display control means for displaying on the display device any particular object and an icon corresponding to control information to change attributes of the object; and
control information adding means for adding control information to the object by relating the icon to the object on a display screen of the display device.

According to this arrangement, only by relating the icon to the object, the control information is added to the object to thereby change a display state and/or attributes of the object easily.

The display control means may comprise means for displaying on the display device a plurality of icons each allocated different control information. The control information adding means may relate a desired one of the plurality of icons to the object on the display screen of the display device to thereby add to the object control information corresponding to the desired icon.

The control information adding means may relate the icon to the object by dragging and dropping the icon onto the object.

The icon may correspond to a plurality of pieces of control information. The control information adding means may select one from the plurality of pieces of control information at a position where the icon is dropped on to the object and then adds the selected piece of control information to the object.

The control information may specify a type or a mode in which the object is displayed.

The control information may specify the conditions to enable the object to be displayed on said display device.

The control information comprises information on a link with another object.

The control information may comprise information on a category classification of the object.

The control information may comprise information on a different image displayed along with the object.

The present invention also provides an object attribute changing method comprising the steps of:
displaying any particular object and an icon corresponding to control information to change attributes of the object; and
adding control information to the object by relating the icon to the object on a display screen.

FIG. 1 is a perspective back view of an electronic still camera;
FIG. 2 is a block diagram of the still camera;
FIG. 3 is a flowchart of an outline of a whole control program executed by a control system;
FIG. 4 is a flowchart of a program indicative of a record mode process;
FIG. 5 is a flowchart of a program indicative of a stamp process;
FIG. 6 illustrates an operation picture displayed on a display screen in the record mode process;
FIG. 7 illustrates various operation icons displayed on the display screen;
FIG. 8 illustrates a data composition of stamp information;
FIG. 9 illustrates a picture displayed during a secret process;
FIG. 10 illustrates a picture displayed during a special effect process;
FIG. 11 illustrates a picture displayed during an image conversion 1 process;
FIG. 12 illustrates a picture displayed during an image conversion 2 process;
FIG. 13 illustrates a picture displayed during an mosaic process;
FIG. 14 illustrates a picture displayed during a gradation process;
FIG. 15 illustrates a picture displayed during a browse date specifying process;
FIG. 16 illustrates a picture displayed during a signal arrival unnotification specifying process;
FIG. 17 illustrates a picture displayed during an effective term specifying process;
FIG. 18 illustrates a picture displayed during a position information process based on GPS information;
FIG. 19 illustrates a picture displayed during an image conversion 1 process based on PHS system cell information;
FIG. 20 illustrates a picture displayed during a link specifying process;
FIG. 21 illustrates a picture displayed during a category classification process;
FIG. 22 illustrates a picture displayed during a stamp mark process;
FIG. 23 is a flowchart of a part of a program indicative of a reproduction mode process executed by the control system;
FIG. 24 is a flowchart of the remainder of the program indicative of the reproduction mode process executed by the control system;
FIG. 25 is a flowchart of a program indicative of a secret-image reproducing process;
FIG. 26 is a flowchart of a program indicative of a special-effect image reproducing process;
FIG. 27 illustrates a reproduced special effect image;
FIG. 28 is a flowchart of a program indicative of an image converting/reproducing process;
FIGS. 29A and B respectively illustrate a division puzzle and an image whose hue was changed;
FIG. 30 is a flowchart of a program indicative of a mosaic or gradation image reproducing process;
FIGS. 31A and B illustrate that mosaic and gradation images are reproduced, respectively;
FIGS. 32A and B are flowcharts of a program indicative of a browsing-dated image reproducing process and a program indicative of an effective-termed image reproducing process, respectively;
FIG. 33 is a flowchart of a program indicative of a position-informationed image reproducing process;
FIGS. 34A and B each illustrate a reproduced image with a position information message;
FIG. 35 is a flowchart of a program indicative of a specified-linked image reproducing process;
FIG. 36 illustrates a concept of linking;
FIG. 37 is a flowchart of a program indicative of a category-classificationed image reproducing process;
FIG. 38 illustrates an image object on which a section icon indicative of a category classification is pasted visually;
FIG. 39 illustrated downloading and displaying an image object, using a section icon;
FIG. 40 is a flowchart of a stamp-marked image reproducing process; and
FIGS. 41A, B and C each illustrate a reproduced image with a stamp mark.

Now, an embodiment of the present invention will be described, using an electronic still camera as an example, with reference to the accompanying drawings. The reason for using the electronic still camera as an example is as follows. Generally, many of the electronic still cameras, especially with a monitoring display device, are capable of reproducing a recorded image file (image object) on the spot, and the user is able to perform simple processing on the image object (a change of its attributes) while viewing the reproduced image. Thus, the electronic still cameras having the functions of producing, displaying and processing image files are each considered to be a kind of an image object processing device.

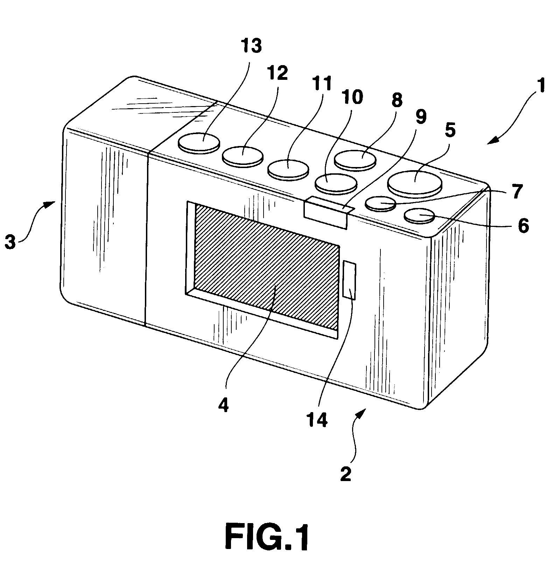

FIG. 1 is a perspective back view of the electronic still camera 1, which although not limited especially, comprises a body 2 and a camera device 3 attached rotatably to the body 2. A photographing lens (not shown) exposed externally is attached to the front (in FIG. 1, back) of the camera device 3. An image sensor (CCD) hidden within the camera device 3 is attached to a back of the photographing lens. In a recording mode to be described later, the image sensor converts an object image picked up by the photographing lens to a video signal and outputs a corresponding periodical image signal (frame image signal) of high resolution depending on the number of pixels of the object image.

A touch-paneled flat display unit 4 is attached to the back of the body 2 to display an image (a through image for adjusting its compositional arrangement or a recorded captured image). Provided on an upper surface of the body 2 are various operation keys, for example, a shutter key 5 which fixes the exposure when half depressed and which captures the image when depressed completely; a plus key 6 which selects a plus direction; a minus key 7 which selects a minus direction; a menu key 8 which performs system setting operations in various respects (such as the minuteness of a recorded image, turning on/off the auto focus, a time required for picking up an image of an animation, etc.); a power source switch 9 for turning on/off a power supply of the camera 1; a display key 10 which causes various overlapping information to be displayed on the display device 4; a record mode key 11 which selects one of record modes for ordinary image pickup and panoramic image pickup; a self timer key 12 which turns on/off a self timer function; and a strobe mode key 13 which turns on/off a strobe function, forced light emission, and red-eye preventing function. In addition, a record/play key 14 which selects one of a record mode and a play mode is provided on the back of the body 2.

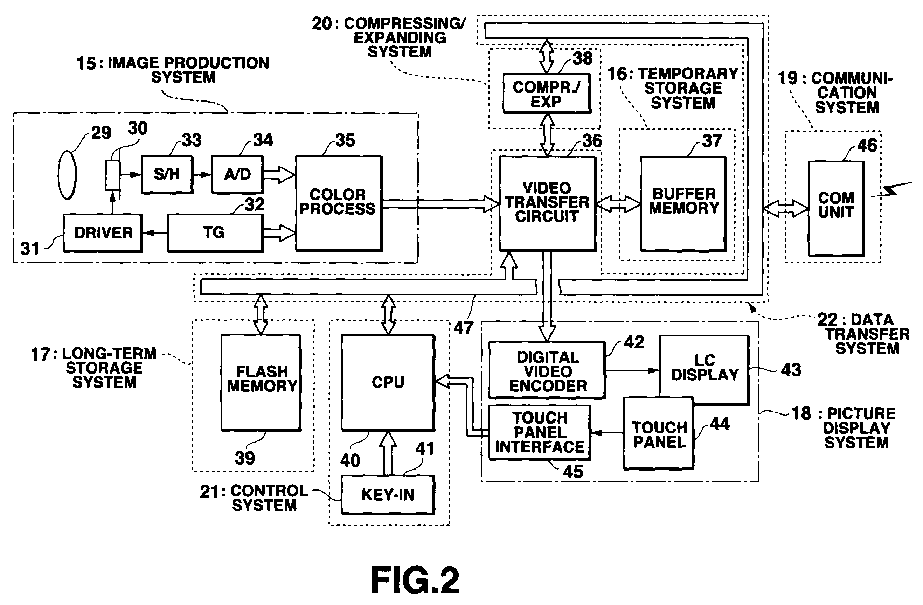

FIG. 2 is a block diagram of the electronic still camera 1, which comprises an image producing system 15 which produces an image signal indicative of an object, a temporary storage system 16 which temporarily stores the image signal for reproducing or playing and processing purposes, a long-term storage system 17 which stores a captured image for a long time, an image display system 18 which displays a reproduced image or an image for confirming its compositional arrangement in the image pickup, a communication system 19 which outputs to the outside the image signal stored in the temporarily storage system 16 or in the long-term storage system 17 and which receives such image signal from the outside, a compressing/expanding system 20 which compresses the image signal when stored in the long-term storage system 17 and expands the image signal read out from the long-term storage system 17, a control system 21 which controls the whole operation of the camera 1, and a data transfer system 22. Those systems each will be described in more detail next.

The image producing system 15 converts an object image to an electric signal with the image sensor, produces a periodical image signal from the electric signal, and outputs it. In the present embodiment, the image producing system 15 is illustrated as producing a color image signal, it may produce a monochromatic image signal. The image producing system 15 comprises an optical system 29 which comprises a photographing lens and an iris mechanism, an image sensor (hereinafter referred to as a CCD) 30 which converts light from the object which has passed through the optical system 29 to an electric signal, and which outputs a corresponding frame image signal of a predetermined cycle, a driver 31 which drives the CCD 30, a timing generator 32 which generates various timing signals including a signal which controls the image pickup time (electronic shutter time) of the CCD 30, a sample and hold circuit 33 which samples a frame image signal output from the CCD 30 and eliminates noise, an analog-to-digital converter 34 which converts the noise-free frame image signal from the sample and hold circuit 33 to a digital signal, and a color processing circuit 35 which produces a brightness/color-difference synthesis signal (which can be referred to as a "YUV signal" hereinafter) or a color image signal, using an output from the analog-to-digital converter 34.

The temporary storage system 16 comprises a buffer memory 37 having a predetermined storage capacity composed of a rewritable storage medium (for example, a semiconductor memory such as a DRAM or SRAM), which has a buffer area of at least a size or storage capacity enough to develop the image signal fetched from the image producing system 15, the communication system or the long-term storage system 17 through the data transfer system 22. More particularly, the buffer area has a size substantially capable of temporarily storing at least one still image. When the camera is capable of picking up/reproducing the image of an animation, the buffer area has substantially a size capable of temporarily storing a plurality of images which compose the animation. The still picture buffer area may overlap with, or independent of, the animation buffer area. In addition to the buffer areas, the buffer memory 37 comprises a work area for image processing which is used by the control system 21 when image processing to be described later is performed.

The long-term storage system 17 comprises a rewritable volatile storage medium, for example, a flash memory 39, which has a capacity enough to store scores-hundreds of image files (generally, in the case of the still picture, compressed image files of the JPEG type) of a predetermined type compressed in the compressing/expanding system 20. The flash memory 39 may be of a removable type, for example, a card type.

The image display system 18 reproduces and displays an image signal (a so-called through image) output at predetermined cycles from the image producing system 15 for confirming the compositional arrangement of the image, and reproduces and displays an image recorded in the flash memory 39 or an image received from outside through the communication system 19. The image display system 18 comprises a digital video encoder 42 which converts a size of a reproduced image to a display size, a color liquid crystal display 43 which displays an output from the digital video encoder 42 on the display screen, a touch panel 44 which senses coordinates of a position touched on the display screen of the display 43, a touch panel I/F (interface) 45 which converts an output signal from the touch panel 44 to a predetermined form, which is then output to the control panel 21. The display 42 and touch panel 44 compose the touch-paneled flat display device 4 of FIG. 1.

The communication system 19 comprises a communication unit 46 which sends/receives data to/from external information processing devices through optical, radio or cable communication. The composition of the communication unit 46 depends on its communication system. For example, when it is connected to an external information processing terminal via a public communication telephone line, it should have a composition similar to that of a telephone terminal with a modem.

The compressing/expanding system 20 compresses in a predetermined format an image signal stored in the buffer memory 37 and expands in the format a compressed image file stored in the flash memory 39. The standards of compression/expansion format in the case of a still image are JPEG (Joint Photographic Experts Group) and an extender of an image file according to the standards is "jpg". It is to be noted that when an extender format compatible with JPEG is employed, an extender other than the jpg can be used, but both are not discriminated from each other in the following description.

The control system 21 comprises a CPU 40 which executes a predetermined control program to control the whole operation of the camera 1, and a key-in unit 40 which responds to operation of a respective one of the various keys including the shutter key 5 (5-14 of FIG. 1) to produce a required key operation signal and to provide this signal to CPU 40.

The data transfer system 22 comprises a video transfer circuit 36 which compromises flows of data among the respective systems and buses (data bus, address bus and control line) 47 which connect the respective systems.

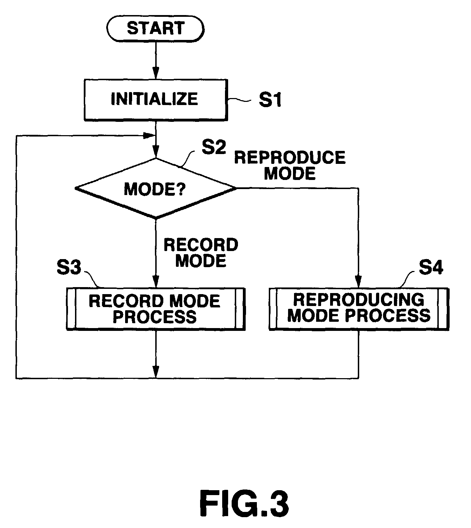

Operation of this camera will be described next. FIG. 3 is a flowchart indicative of an outline of a whole control program executed by the control system 21. When the power supply is turned on (the power source switch 9 of FIG. 1 is turned on), this program starts. First, in step S1 the control system 21 performs an initializing operation including checking the operation of the camera. In step S2 it determines a set operational mode of the record/play key 14 (whether the key 14 is in the record mode or play mode) and performs a process (a record mode process in step S3 or a play mode process in step S4) branching depending on a result of the determination. It repeats those steps. Although there are further operational modes including a system setting mode, further description thereof will be omitted for simplifying purposes.

### Record mode process:

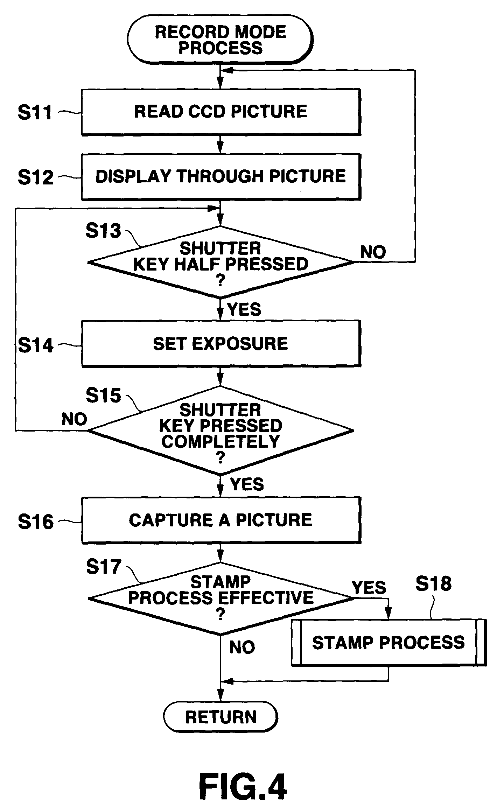

FIG. 4 is a flowchart of a program indicative of a record mode process. When this flowchart starts, first, the control system 21 repeats reading an image signal or a CCD image from the image producing system 15 in step S11 and displaying the image signal on the image display system 18 in step S12 until the shutter key 5 is depressed half. Thus, a corresponding through image is updated and displayed at predetermined intervals of time on the liquid crystal display 43 of the image display system 18 for compositional arrangement thereof.

Then, in step S13 when the half depression of the shutter key 5 is sensed, the iris of the optical system 29 is fixed at a degree of exposure depending on the brightness of the object at that time. In step S15 when the complete depression of the shutter key is sensed, in step S16 the CCD image at that time is compressed and stored in the flash memory 39, which is referred to as image capture and the recorded image is referred to as a captured image, which is the one compressed according to JPEG by the compressing/expanding system 20. An image file (image object) containing this image has an extender "jpg" and a title of a string of not more than 8 characters.

After the image is captured, in step S17 it is determined whether a stamping process is effective. As will be cleared in the following description, the stamping process comprises adding various information to the captured image to facilitate management and processing of the captured image. If the stamping process is not effective, the control returns to step S2 of FIG. 3. If stamping process is effective, the control passes to step S18 to execute a stamping process program. It is to be noted that the stamping process may be effective at all times or selected in the system setting mode whose description is omitted.

### Stamping process:

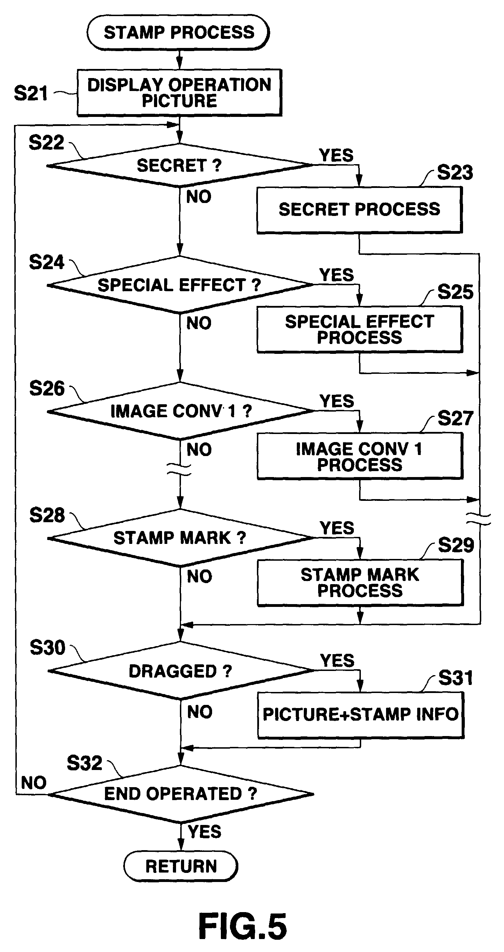

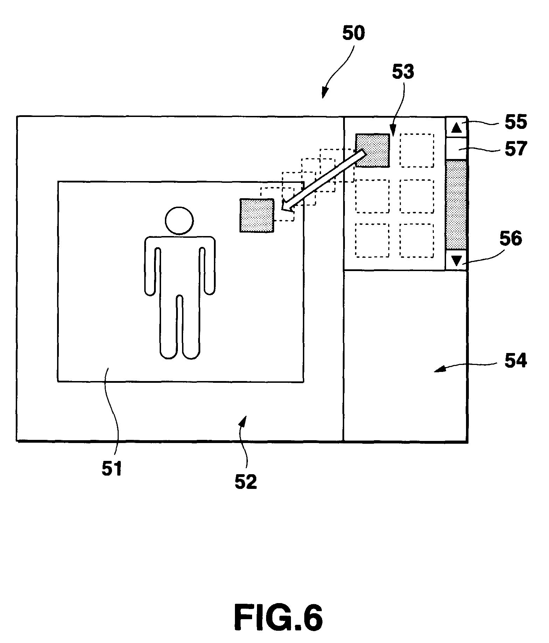

FIG. 5 is a flowchart of a program for the stamping process. When this program starts, first, in step S21 a predetermined operation picture 50 is displayed on the liquid crystal display 43. FIG. 6 illustrates the operation picture 50 which comprises a first area 52 which displays an image object (captured image) 51, a second area 53 which displays various operation icons (stamps), and a third area 54 which displays information on each of the operation icons and receives information input by the user. A graphic keyboard area and/or handwritten character input area are displayed in a pop-up manner on the operation picture 50 to facilitate input of information by the user.

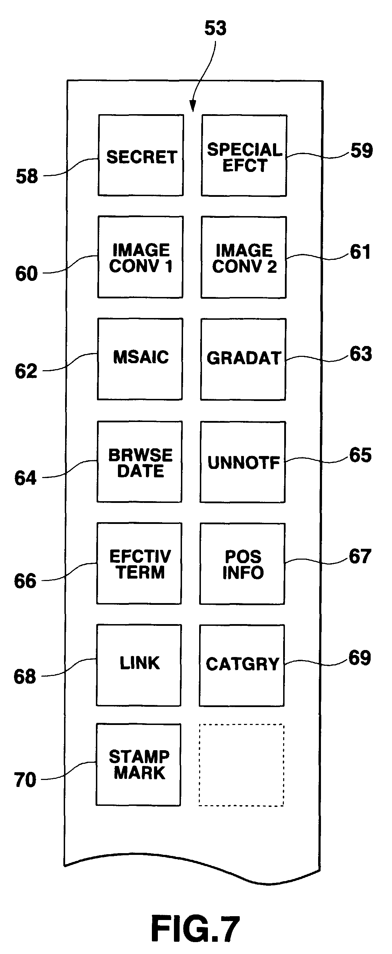

The second area 53 is adapted to be scrolled up and down by operating upper and lower triangular-marked buttons 55, 56 or intermediate button 57 provided along a right-hand edge of the operation picture 50 to enable the user to select one of various operation icons of FIG. 7, which include, for example, a secret (SECRET) icon 58, a special effect (SPCIAL EFCT) icon 59, an image conversion (IMAGE CONV) 1 icon 60, an image conversion (IMAGE CONV) 2 icon 61, a mosaic (MSAIC) icon 62, a gradation (GRADAT) icon 63, a browse-date specifying (BRWSE DATE) icon 64, a signal arrival unnotification specifying (UNNOTF) icon 65, an effective term specifying (EFCTIV TERM) icon 66, a position information (POS INFO) icon 67, a link specifying (LINK) icon 68, a category classifying (CATGRY) icon 69, and a stamp mark (STAMP MARK) icon 70. Titles of the icons are preferably not illustrated text characters, but illustrations appropriate for recalling the contents of the respective icons.

A desired icon is selected by touching a finger or a pen tip on the icon. An operation icon is related with an image object by dragging and dropping the icon onto the image object 51 (for example, by selecting and moving the icon as selected as shown by an outline arrow in FIG. 6, and then dropping it onto the image object 51). Alternatively, the icon may be related to the image object by selecting the icon and then touching it with a finger or a pen tip.

Referring back to FIG. 5, selection of the respective icons is detected on the displayed operation picture. For example, in FIG. 5, operated ones of the secret icons 58-stamp mark icon 70 are detected sequentially in a looping process involving steps S22-32. When the termination of the looping process (in step S32) (for example, a touch on an end button (not shown) provided on the operation picture 50) is detected, the control returns to step S2 of FIG. 3.

When selection of any operation icon is detected in the looping process, a corresponding process is performed. For example, when selection of the secret icon is detected in step S22, the control passes to step S23 to perform a secret process. When selection of the special effect icon 59 is detected in step S24, the control passes to step S25 to perform a special effect process. When selection of the image conversion 1 icon 60 is detected in step S26, the control passes to step S27 to perform an image conversion 1 process, ...(The description herein is omitted).... When selection of the stamp mark icon 70 is detected in step S28, control passes to step S29 to perform a stamp mark process.

Even in any process, the control returns to the looping process to pass to step S30, where it is determined whether the operation icon is dragged and dropped onto the displayed image object 51. If it is, the control passes to step S31, where "stamp information", which will be described later, produced by the process performed when the dragged icon was selected (for example, the process performed in step S23 when the dragged icon includes the secret icon 58; the process performed in step S25 when the dragged icon includes the special effect icon 59) is added to the displayed image object 51 to update same, and the resulting object is then compressed and stored in the flash memory 39 (by overwriting or along with a new file name). The control then passes to step S32 to detect termination of the process. If no operation icon is dragged, the control directly passes to step S32.

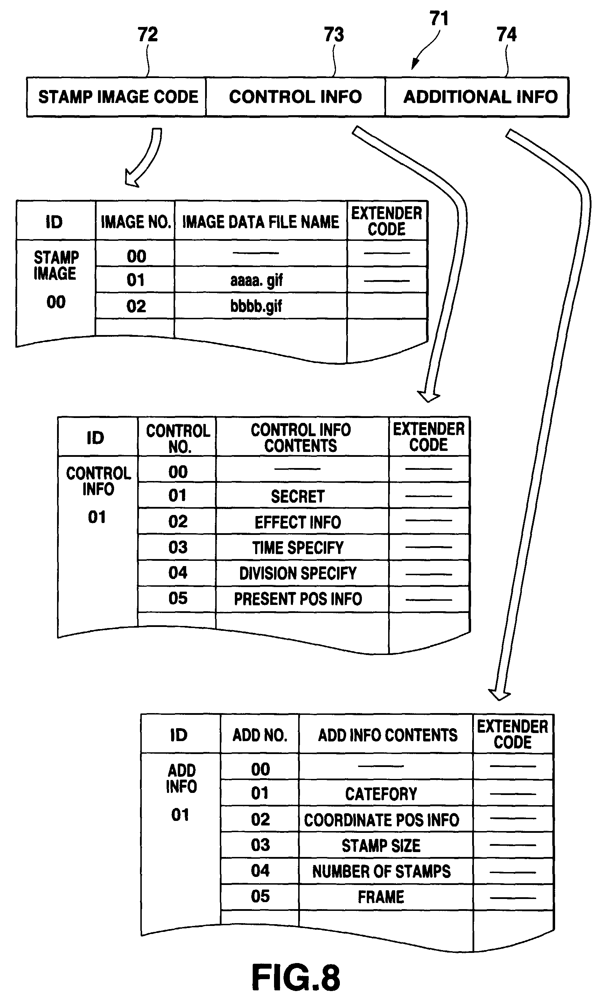

FIG. 8 shows a data composition of the stamp information 71, which comprises, for example, three fields; that is, a first or head field 72 for storage of a stamp image code, a second or intermediate field 73 for storage of control information, and a third or last field 74 for storage of additional information. In more detail, the first field 72 comprises an identification section, an image number section, an image data file name section and an extension code section. The second field 73 comprises an identification section, a control number section, a control information content section and an extension code section. The third field 74 comprises an identification section, an additional number section, an additional information content section and an extension code section.

Information data for distinguishing the fields, for example, "00", "01", and "02" are stored in the respective identification sections of the first, second and third fields 72, 73, and 74, respectively, which are combined with the following two-digit information data (information on the image number section in the case of the first field 72, information on the control number section in the case of the second field 73 and information on the additional number section in the case of the third field 74) to specify the contents of each field.

The contents of data settable in each field are prepared in the form of a table. In the illustrated example, nothing or no image data file name is stored in a first row of a table corresponding to the first field 72, and a convenient image data file name "aaaa.gif" is stored in a second row. Similarly, a convenient image data file name "bbbb.gif" is stored in a third row.

Nothing or no control information data is stored in a first row of a table corresponding to the second field 73; secret information is stored in a second row; effect information is stored in a third row; time specifying information is stored in a fourth row; division specifying information is stored in a fifth row; and camera's present position information is stored in a sixth row.

Nothing or no additional information data is stored in a first row of a table corresponding to the third field 74; category information is stored in a second row; coordinate position information is stored in a third row; stamp size information is stored in a fourth row; the-number-of-stamps information is stored in a fifth row; and frame information is stored in a sixth row.

In the present embodiment, the extender code section of each of the first, second and third fields 72, 73 and 74 is not used.

The respective information storage sections (image data file name section, control information section and additional information section) of the tables corresponding to the first, second and third fields 72, 73 and 74 are referred to in the respective steps S23, S25, S27, ..., S29 of FIG. 5 executed in response to selection of the corresponding operation icons 58-70 (FIG. 7).

For example, when the secret process (step S23) is executed, the second row ("0101") of the second field 73 is referred to. If the special effect process (step S25) is executed, the third row ("0102") of the second field 73 is referred to. If the image conversion 1 process (step S27) is executed, the fifth row ("0104") of the second field 73 is referred to.

A process performed when each of the icons 58-70 (FIG. 7) is selected will be described next:

### Secret process (step S23 of FIG. 5):

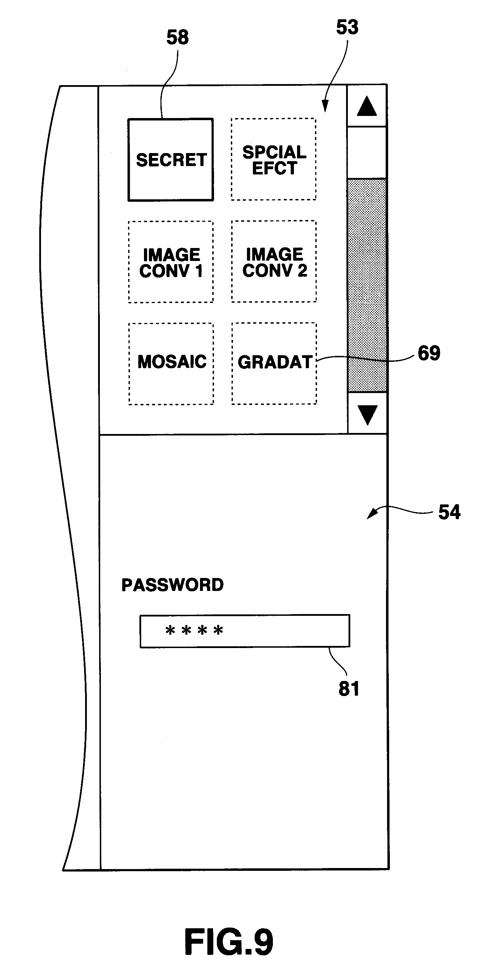

FIG. 9 illustrates pictures displayed on the second and third areas of 53 and 54 during execution of the secret process. During this process, the secret icon 58 in the second area 53 is a selected state and the third area 54 is in a displayed state corresponding to the secret process, which includes hiding the image object 51 displayed on the operation picture 50 (FIG. 6) where a password is required to read the image object 51.

Thus, in this secret process, secret attributes are required to be added to the image object 51 and any password information to release the image object 51 from the secret attributes is required to be added to the image object 51.

A text box 81 in the third area 54 is used to input the password thereto. The user touches the text box 81, for example, with a pen tip to display a required text input support means (for example, a graphic keyboard area or a handwritten character input area) in a pop-up manner, and then inputs any password of digits of characters/symbols.

Thus, the secret attributes and password information are stored in the appropriate fields for the FIG. 8 stamp information. Then, by dragging and dropping the secret icon in the second area 58 onto the image object 51, the stamp information including the secret attributes and password information is synthesized with, or added to, the object 51.

While in the secret process the password is illustrated as being input each time the secret process is performed, a preset plurality of secret stamps each for a respective password may be synthesized with, or added to, the corresponding image objects.

### Special effect process (step S25 of FIG. 5):

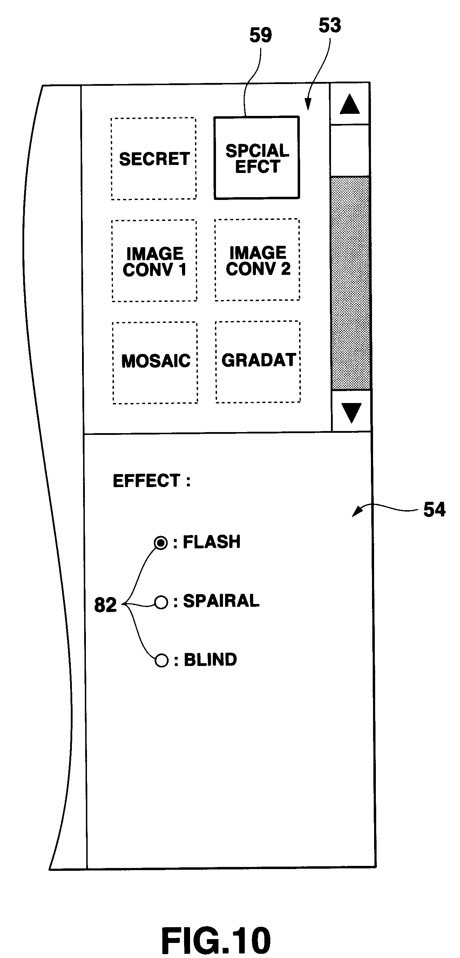

FIG. 10 illustrates pictures displayed in the second and third areas 53 and 54 during execution of the special effect process. During this process, the special effect icon 59 in the second area 53 is in a selected state and the third area 54 is in a displayed state corresponding to the special effect process.

The special effect process comprises giving various special effects to the image object 51 displayed on the operation picture 50 (FIG. 6). As the special effects, desired ones are selectable from among well-known image processing techniques such as, for example, slide, flash and spiral effects.

Thus, in the special effect process, information representing the kind of special effect process (if necessary, further information representing a degree of the special effect) is required to be added to the image object 51.

Three option buttons 82 in the third area 54 are used to specify the respective kinds of special effects (flash, spiral and blind effects indicated for convenience sake in FIG. 10). The user touches one of the option buttons 82, for example, with a pen tip for selecting purposes (a dark-dotted option button represents that the button is selected). If necessary, a control appropriate for the user to input information representing a degree of the special effect may be disposed in the third area 54.

Thus, the information representing the degree of the special effect (and when the control to input information representing the degree of the special effect is disposed, the information selected by the control) is stored in the appropriate field for the FIG. 8 stamp information. Then, by dragging and dropping the special effect icon 59 in the second area 58 onto the image object 51, the FIG. 8 stamp information including the information representing the degree of the special effect (and when the control to input information representing the degree of the special effect is disposed, the information selected by the control) is synthesized with the image object 51. Of course, a desired one may be selected from a plurality of stamps each created for a respective one of a plurality of special effects, dragged and dropped onto the image object 51.

### Image conversion 1 process (step S27 of FIG. 5):

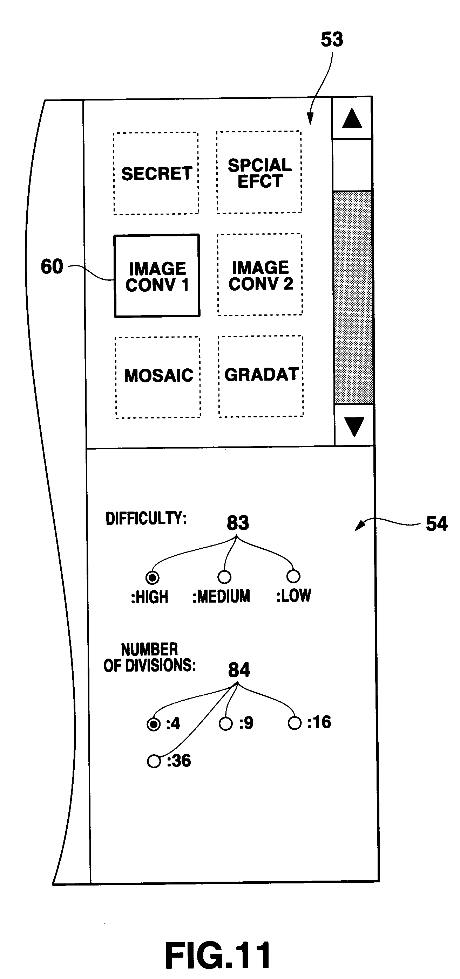

FIG. 11 illustrates pictures displayed in the second and third areas 53 and 54 during execution of the image conversion 1 process. During this process, an image conversion 1 icon 60 in the second area 53 is in a selected state and the third area 54 is in a displayed state corresponding to the image conversion 1 process.

The image conversion 1 process includes applying a division rearranging puzzle to the image object 51 displayed on the operation picture 50 (FIG. 6) (the puzzle includes rearranging in specified order a random array of divisions into which a picture is divided).

Thus, in the image conversion 1 process, information indicating a degree of difficulty of the puzzle and/or information representing the number of divisions are required to be inputted.

Three option buttons 83 provided at upper positions in the third area 54 are each used to specify a degree of difficulty of the puzzle. Four option buttons 84 provided at lower positions are each used to specify the number of divisions. The user touches one of the option buttons 83, for example, with a pen tip to select a degree of difficulty of the puzzle, and touches one of the option buttons 84 to select the number of divisions.

Thus, information on the degree of difficulty and information on the number of divisions are stored in the appropriate fields for the FIG. 8 stamp information. Then, by dragging and dropping the image conversion 1 icon 60 in the second area 58 onto the image object 51, the FIG. 8 stamp information comprising the information on the degree of difficulty and on the number of divisions is synthesized with the image object 51.

### Image conversion 2 process (omitted in FIG. 5):

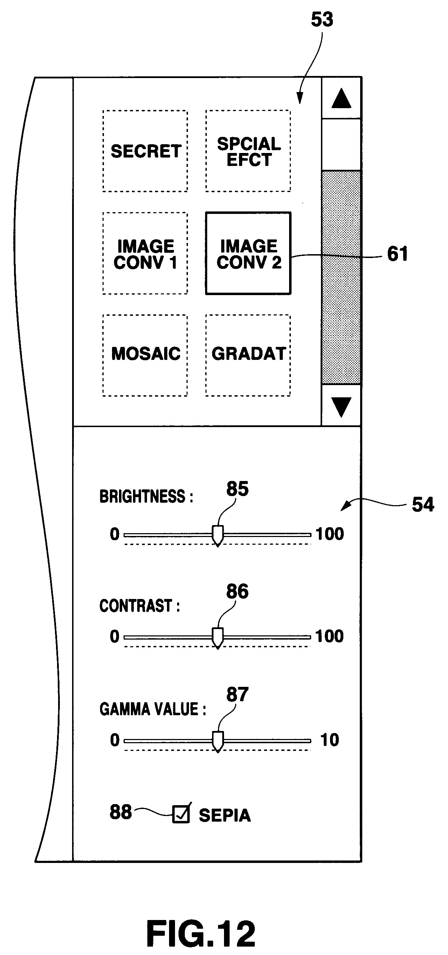

FIG. 12 illustrates pictures displayed on the second and third areas 53 and 54 during execution of the image conversion 2 process. During this process, the image conversion 2 icon 61 in the second area 53 is in a selected state and the third area 54 is in a displayed state corresponding to the image conversion 2 process, which comprises changing to another a hue of the image object 51 displayed on the operation picture 50 (FIG. 6) and changing the color of the image object 51 to sepia.

Thus, in this image conversion 2 process, information representing a hue (including brightness, contrast and gamma values) and information specifying a change of the color of the image object 51 to sepia are required to be inputted.

Three slide controls 85, 86 and 87 provided in the third area 54 are used to specify brightness, contrast and gamma values, respectively. A check box 88 provided at the lowest position is used to specify a change of the color of the image object 51 to sepia. To this end, the user specifies, for example with a pen tip, any particular one of the slide controls 85-87 to specify the brightness, contrast and gamma value or select and check off the check box 88 to specify a change of the color of the image object 51 to sepia.

Thus, the information on a change of the hue of the image object 51 or on a change of the color of the image object 51 to sepia is stored in the appropriate field for the FIG. 8 stamp information. Then, by dragging and dropping the image conversion 2 icon 61 in the second area 58 onto the image object 51, the FIG. 8 stamp information comprising the information on the change of the hue of the image object 51 and on the change of the color of the image object 51 to sepia is synthesized with the image object 51.

### Mosaic process (omitted in FIG. 5):

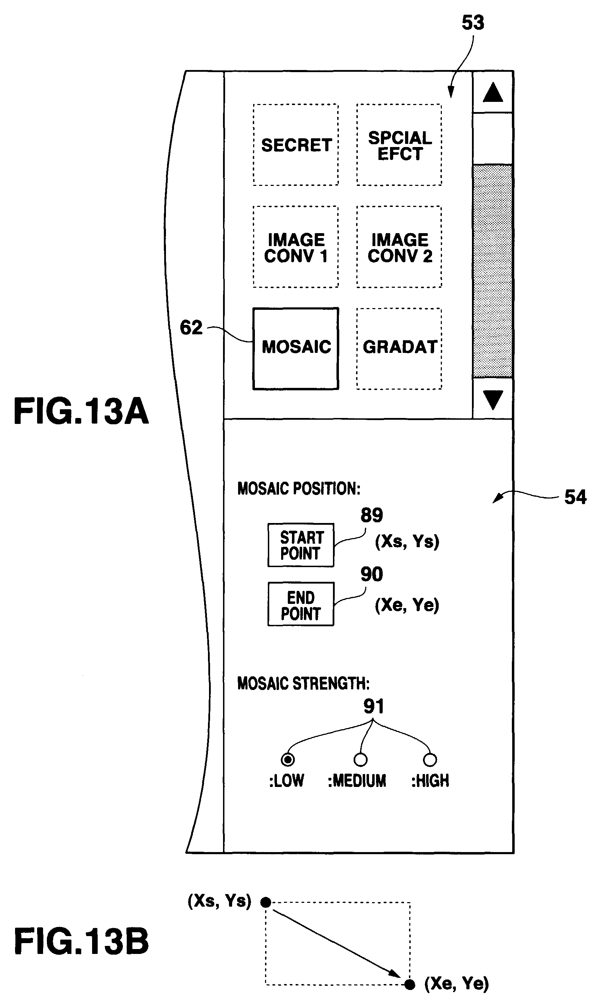

FIG. 13 illustrates pictures displayed in the second area 53 and third area 54 during execution of the mosaic process. During this process, a mosaic icon 62 in the second area 53 is in a selected state whereas the third area 54 is in a displayed state corresponding to the mosaic process, which comprises covering with a mosaic pattern any portion of the image object 51 displayed on the operation picture 50 (FIG. 6). Thus, in this mosaic process, information on the coordinates of a position of the portion of the image object 51 covered with the mosaic pattern and information representing a strength of the mosaic pattern are required to be inputted.

Two button controls 89 and 90 provided in the third area 54 are each used to input coordinate information and three option buttons 91 provided in the third area 54 are each used to specify a strength of the mosaic pattern.

When the coordinate information is inputted, the user sequentially touches with the pen tip the button control 89 indicated as a start point, coordinates (Xs, Ys) of the start point of the image object 51, the button control 90 indicated as an end point, and the coordinates (Xe, Ye) of the end point of the image object 51. Thus, the coordinates (Xs, Ys) and (Xe, Ye) of the start and end points are read and displayed on the respective sides of the button controls 89 and 90. A range indicated by a broken line rectangle and containing the two opposite corner coordinates (Xs, Ys) and (Xe, Ye) in FIG. 13B is recognized as a portion of the image object 51 to be covered with the mosaic pattern. The user selects one of the option buttons 91 as requested to specify a mosaic intensity.

Thus, the information on the portion of the image object to be covered with the mosaic pattern and on the strength of the mosaic pattern is stored in the appropriate fields for the FIG. 8 stamp information. Then, by dragging and dropping the mosaic icon 62 in the second area 58 onto the image object 51, the FIG. 8 stamp information comprising the information on the image object portion to be covered with the mosaic pattern and the information on the mosaic intensity is synthesized with the image object 51.

### Gradation process (FIG. 5):

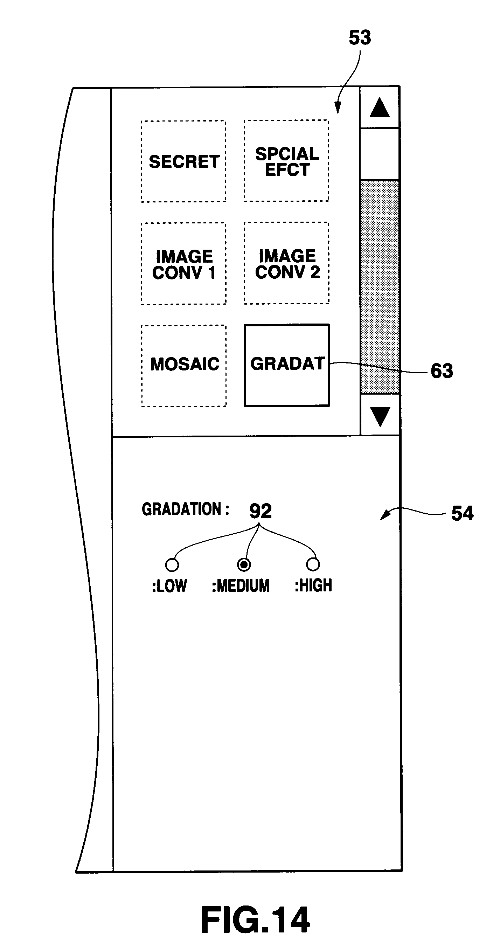

FIG. 14 illustrates pictures displayed in the second and third areas 53 and 54 during execution of the gradation process. During this process, a gradation icon 63 in the second area 53 is in a selected state and the third area 54 is in a displayed state corresponding to the gradation process, which comprises performing the gradation process on the image object 51 displayed on the operation picture 50 (FIG. 6).

Thus, in this process, information representing a degree of the gradation is required to be inputted. Three option buttons 92 provided in the third area 54 are each used to specify a degree of the gradation.

The user touches one of the option buttons 92 with the pen tip to select a desired degree of the gradation. Thus, information representing the degree of the gradation is stored in the appropriate field for the FIG. 8 stamp information. Then, by dragging and dropping the gradation icon 63 in the second area 58 onto the image object 51, the FIG. 8 stamp information comprising the information representing the degree of the gradation is synthesized with the image object 51.

### Browse date specifying process (omitted in FIG. 5):

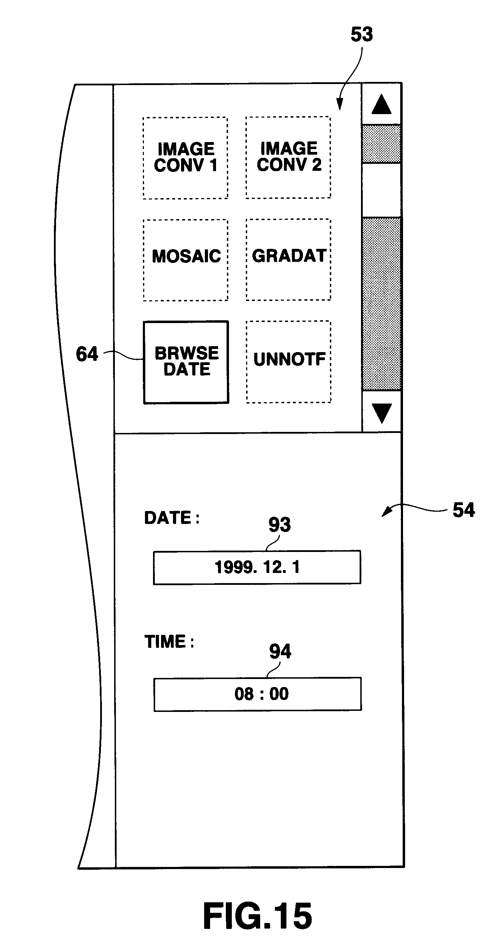

FIG. 15 illustrates pictures displayed in the second and third areas 53 and 54 during execution of this process. During this process, a browse date specifying icon 64 in the second area 53 is in a selected state and the third area 54 is in a displayed state corresponding to the browse date specifying process, which comprises specifying a date on and after which the image object 51 displayed on the operation picture 50 (FIG. 6) is browsable (it is not browsable before the date).

Thus, in this process, information indicating the date where the browse starts is required to be inputted. Two text boxes 93 and 94 provided in the third area 54 are used to specify the date and time, respectively, of the browse.

The user touches the text boxes 93 and 94 with the pen tip to display required text input support means (for example, a graphic keyboard area or handwritten character input area) in a pop-up manner, and then inputs a required date (19999.12.1 in FIG. 15) and a time (08:00 in FIG. 15).

Thus, information representing the browse date and time is stored in the appropriate field of the FIG. 8 stamp information. Then, by dragging and dropping a browse date and time specifying icon 64 in the second area 58 onto the image object 51, the FIG. 8 stamp information comprising the information on the browse date and time is synthesized with the image object 51.

### Signal arrival unnotification specifying process:

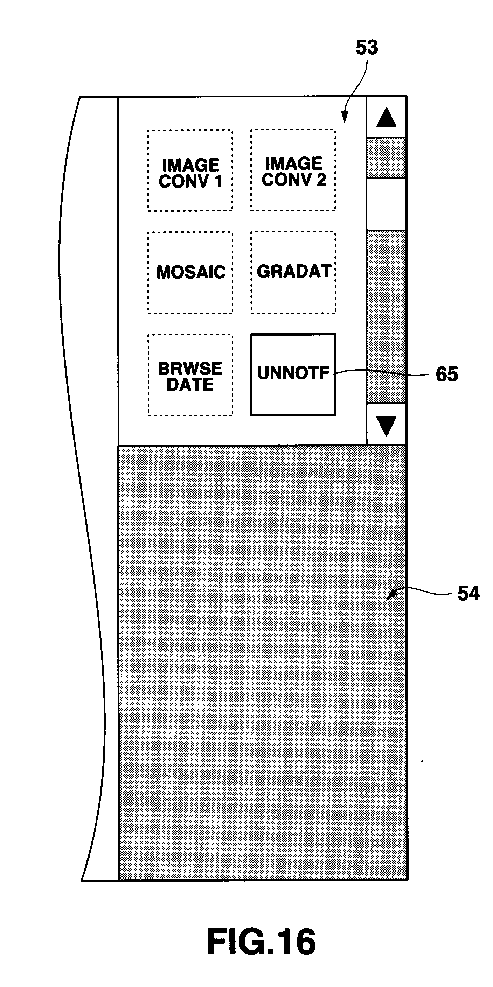

FIG. 16 illustrates pictures displayed in the second and third areas 53 and 54 during execution of this process. During this process, a signal arrival unnotification specifying icon 65 in the second area 53 is in a selected state and the third area 54 is in a displayed state corresponding to the signal arrival unnotification specifying process, which comprises failing to inform a particular receiver that an image object 51 sent, for example, especially by E-mail to the particular receiver has arrived at the receiver. This process gives the image object 51 attributes for signal arrival unnotification. Thus, in this process the user is not required to input any information and the third area 54 is blank.

Only by dragging and dropping a signal arrival unnotification specifying icon 65 in the second area 58 onto the image object 51, the FIG. 8 stamp information including the attributes for the signal arrival unnotification is synthesized with the image object 51.

### Effective term specifying process:

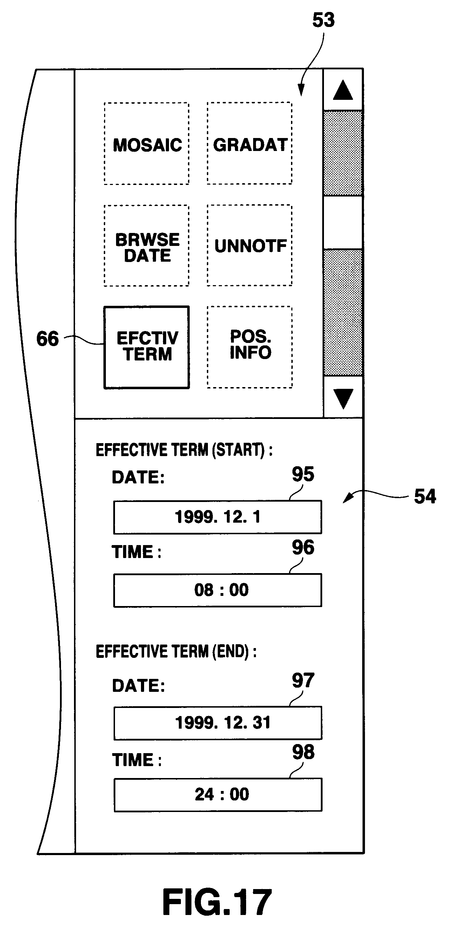

FIG. 17 illustrates examples pictures displayed in the second and third areas 53 and 54 during this effective term specifying process. During this process, an effective term specifying icon 66 in the second area 53 is in a selected state and the third area 54 is in a displayed state corresponding to the effective term specifying process, which comprises specifying a term for which the image object 51 displayed on the operation picture 50 (FIG. 6) is effectively displayable (Nothing cannot be browsed excluding for the term).

Thus, in this process, the user is required to input information representing the dates and times when the term starts and ends.

Four text boxes 95-98 provided in the third area 54 are each used to input such information. The user touches the respective text boxes 95-98 with the pen tip to display required text input support means (such as, for example, a graphic keyboard area or handwritten character input area) in a pop-up manner and then inputs desired dates and times. For example, in FIG. 17, "1999.12.1" and "08:00" are inputted as the date and time when the term starts, and "1999.12.31" and "24:00" as the date and time when the term ends.

Thus, the information representing the effective term is stored in the appropriate field for the FIG. 8 stamp information. Then, by dragging and dropping the effective term specifying icon 66 in the second area 58 onto the image object 51, the FIG. 8 stamp information comprising the information on the effective term is synthesized with the image object 51. Of course, the effective term may be specified as a week or month after a predetermined date and time (when the image object 51 was created, transmitted or received) without specifying the start and end of the term as described above. In addition, corresponding dedicated stamps may be provided, of course.

### Position information process (omitted in FIG. 5):

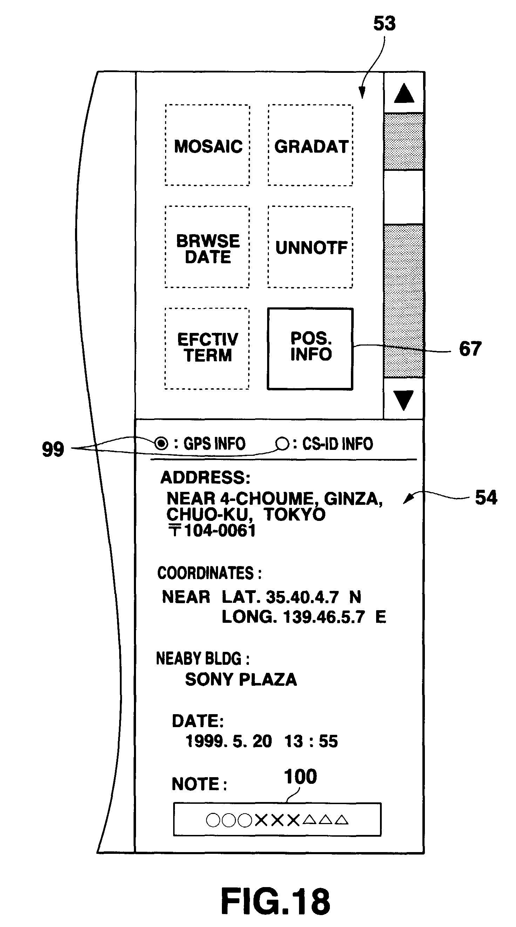

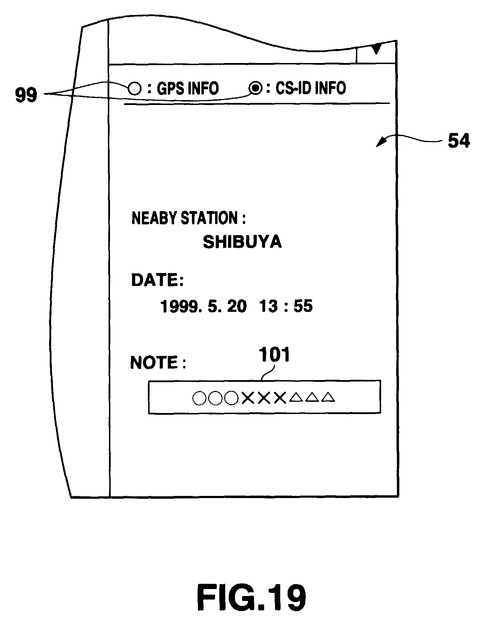

FIGS. 18 and 19 illustrate pictures displayed in the second and third areas 53 and 54 during execution of this process. During this process, a position information icon 67 in the second area 53 is in a selected state and the third area 54 in a displayed state corresponding to the position information process, which comprises adding information on the present position of the electronic camera to the image object 51 displayed on the operation picture 50 (FIG. 6). The user may input position information while viewing a map, for example. A position information acquiring device such as a GPS is preferably used in terms of convenience. Information on cells of a PHS system may be available although this system can not provide a high position accuracy such as is provided by the GPS. Two option buttons 99 provided in the third area 54 are used to select means for acquiring position information (on one of the GPS and the cells of the PHS system in FIG. 18).

FIG. 18 shows a picture displayed when the GPS information is used. FIG. 19 shows a picture obtained when the information on the cells of the PHS system is used. In the case of FIG. 18, considerably accurate position information is acquired whereas in the case of FIG. 19 rough position information, for example, on a nearby station at most is only obtained. This difference in position accuracy wholly depends on the performance of the position information acquiring means used. The information on the GPS basically comprises coordinates (longitude and latitude) whereas the information on the cells of the PHS system basically comprises cell identification numbers, namely, information on the ID of a base station CS. The present position is difficult to specify only by viewing the acquired information on the GPS or the PHS cells. Thus, easily understandable information (for example, on a written address, a nearby building or station name, etc.) is preferably displayed along with map data. A text box 100 for a memorandum is preferably provided.

The user touches the text box 100 with the pen tip to display required text input support means (for example, a graphic keyboard area or handwritten character input area) in a pop-up manner, and inputs a required memorandum about image data 51. Then, by dragging and dropping a position information icon 67 in the second area 58 onto the image object 51, the FIG. 8 stamp information comprising the position and memorandum information is synthesized with the image object 51.

### Link specifying process:

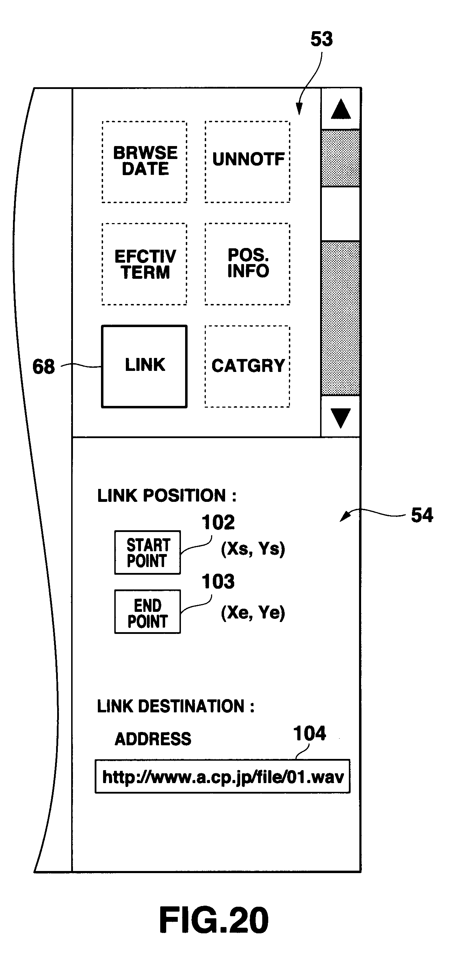

FIG. 20 shows pictures displayed in the second and third areas 53 and 54 during execution of this process. During this process, a link specifying icon 68 in the second area 53 is in a selected state and the third area 54 is in a displayed state corresponding to the link specifying process, which comprises embedding link information into any portion of the image object 51 displayed on the operation picture 50 (FIG. 6), and registering information on an address of any other object, for example, its Internet URL (Uniform Resource Location) related to the link information.

Thus, in this process, information on coordinates of a location where the link information is to be embedded and information on an address of a destination to be linked with are required to be inputted.

Two button controls 102 and 103 provided in the third area 54 are each used to input coordinate information. A text box 104 is used to input an address of a destination to be linked with. When the user inputs the coordinate information, the user sequentially touches with the pen tip the button control 102 written as a start point, the start point coordinates (Xs, Ys) of the image object 51, the button control 103 written as an end point, and then the end point coordinates (Xe, Ye) of the image object 51.

Thus, the two coordinates (Xs, Ys) and (Xe, Ye) of the start and end points are read, and displayed on the respective sides of the button controls 102 and 103, and a rectangular range containing the two opposite corner coordinates (Xs, Ys) and (Xe, Ye) (and shown by a broken line in FIG. 13B) is recognized as an area where the link information is to be embedded.

The user further touches the text box 104 with the pen tip to display required text input support means (for example, the graphic keyboard area or handwritten character input area) in a pop-up manner, and then inputs address information of a character string (http://www.a.co.jp/file/01.way", which implies specifying a 01.wav file present in a file directory of a http server having a www.a.co domain).

Thus, information on the area where the link information is to be embedded and information on the address of the destination to be linked with are stored in the appropriate fields for the stamp information in FIG. 8. Then, by dragging and dropping a link specifying icon 68 in the second area 58 onto the image object 51, the stamp information of FIG. 8 comprising the information on the area where the link information is to be embedded and on the destination to be linked with is synthesized with the image object 51. While the link information is a file on the server, it may be a file on a terminal. In this case, if necessary, when an image object having the link information is required to be sent to a particular receiver, it is sent along with a file of the destination to be linked with. Of course, a stamp may be created for each piece of link information.

### Category classification process (omitted in FIG. 5):

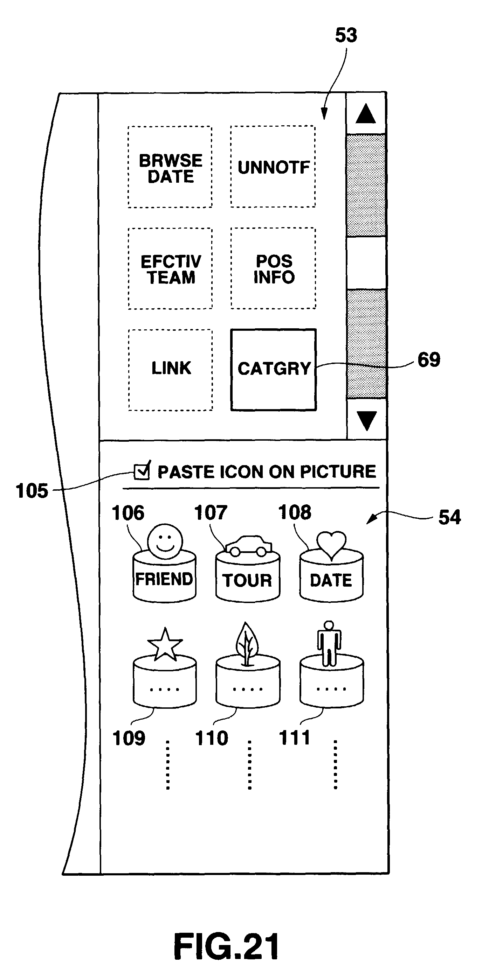

FIG. 21 shows pictures displayed in the second and third areas 53 and 54 during execution of this process. During this process, a category classification icon 69 in the second area 53 is in a selected state and the third area 54 is in a displayed state corresponding to the category classification process, which comprises registering on an image object 51 displayed on the operation picture 50 (FIG. 6) category classification information corresponding to the contents of an image of the image object 51. Thus, means for selecting a category classification is required in this category classification process.

A plurality of section icons 106-111 provided in the third area 54 each provide such selecting means and are especially elaborately wrought so that the category classifications can be understood at a glance. For example, section icons 106, 107 and 108 relate to category classifications "friend", "tour" and "date", respectively. A check box 105 is provided in the third area 54. By checking the box 105 off, one selected from the section icons 109-111 is pasted to the image object 51. That is, the user selects a section icon considered to be appropriate for the contents of the image object 51. In that case, the check box 105 is checked off, if necessary.

Thus, the category classification information for the selected section icon is stored in the appropriate field for the FIG. 8 stamp information. Then, by dragging and dropping the category classification icon 69 in the second area 58 onto the image object 51, the FIG. 8 stamp information comprising the category classification information is synthesized with the image object 51.

In this process, one of the section icons 106-111 may be dragged and dropped onto the image object 51 in place of the category classification icon 69.

### Stamp mark process (step S29 of FIG. 5):

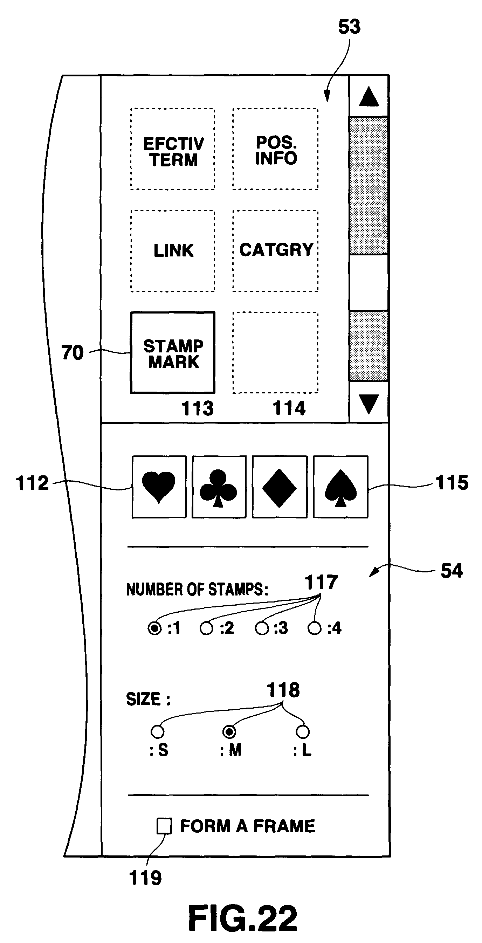

FIG. 22 illustrates pictures displayed in the second and third areas 53 and 54 during execution of the stamp mark process. During this process, a stamp mark icon 70 in the second area 53 is in a selected state and the third area 54 is in a displayed state corresponding to the stamp mark process, which comprises registering any stamp mark on the image object 51 displayed on the operation picture 50 (FIG. 6).

Thus, in this process, means for selecting a stamp mark is required, and the number and size of stamps, and a frame display are required to be specified.

A plurality of stamp marks 112-115 provided in the third area 54 comprise heart, clover, diamond and spade stamp marks arranged in this order from left to right. Two groups of option buttons 117 and 118 are used to select the number and size of stamp marks, respectively. A check box 119 is used to specify a frame display of stamp marks.

The user selects a desired one from the stamp marks 112-115, specifies the number and size of stamp marks, using the two groups of option buttons 117 and 118, and if necessary, checks the check box 119 off to specify a frame display of the selected stamp marks.

Thus, information on the selected stamp mark is stored in the appropriate field for the FIG. 8 stamp information. Then, by dragging and dropping the stamp mark icon 70 in the second area 58 onto the image object 51, the FIG. 8 stamp information comprising the stamp mark information is synthesized with the image object 51.

In this process, one of the stamp marks 112-115 may be dragged and dropped onto the image object 51 in place of the stamp mark icon 70.

### Summary of the recording mode process:

According to the details of the recording mode process described above, that is, the secret process (step S23 of FIG. 5), the special effect process (step S25 of FIG. 5), the image conversion 1 process (step S27 of FIG. 5), ..., the stamp process (step S29 of FIG. 5) started in response to the respective selecting operations of the secret icon 58, special effect icon 59, image conversion 1 icon 60, ..., and stamp mark icon 70 displayed on the second area 53 of the operation picture 50, the attributes of the image object 51 of the first area 52 are changed or processed only by selecting, dragging and dropping any particular icon in the second area 53 onto the image object 51.

When some information is required to be inputted in a process corresponding to the selected icon (for example, when password information is required to be inputted in the secret process), means for inputting the information is displayed in the third area 54 to facilitate inputting the information.

Thus, the user is able to easily perform a required process on the image object or facilitate changing the attributes of the object without requiring any special knowledge.

In addition, the respective processes produce the following advantages:
1) In the secret process, any particular image object 51 is easily hidden to prevent persons other than a particular person who knows a related password from browsing the image object 51 to thereby eliminate the time which would otherwise be required for distributing the image objects 51;
2) In the special effect process, required visual effects such as flashing, spiraling or blinding can be easily given to any particular image object 51 without acquiring dedicated working software and becoming skillful in operating the software;
3) In the image conversion 1 process, any particular image object 51 can be easily divided into pieces for a puzzle game. The divided pieces can be rearranged so as to reproduce the original image object. Thus, the image object 51 can be used for game playing purposes or easily hidden;
4) In the image conversion 2 process, the hue of any image object 51 can be changed to another, and the color of the object 51 can be changed to sepia, without acquiring dedicated working software/becoming skillful in operating the software;
5) In the mosaic process, mosaic work is easily formed on any image object 51 without requiring the user to acquire dedicated processing software and skill in operating the software;
6) In the gradation process, any image object 51 is easily gradated without requiring the user to acquire dedicated processing software and skill in operating the software;
7) In the browse date specifying process, information on a browsable term is added to any image object 51. For example, the image objects 51 can be easily distributed in a limited term;
8) In the signal arrival unnotification specifying process, information on signal arrival unnotification is easily added to any image object 51. For example, this process comprises failing to notify any particular receiver of the fact that an image object 51 sent by E-mail to the receiver has arrived at the receiver;
9) In the effective term specifying process, information on a date on which display of any image object 51 is effective is easily added to the image object 51. For example, a specified date when a Christmas card, New Year's card or Birthday card is effective may be used as the date when any image object 51 is reproduced;
10) In the position information process, the GPS or PHS system cell information is easily added to any image object 51 such that places (for example, sightseeing spots in a destination) can be specified while viewing the image object 51 in the reproduction;
11) In the linking process, link information on any particular image object 51 is easily added to another object such that, for example, the object 51 can be linked with any image object placed on a server of the Internet; and
12) In the category classifying process, category classification information is easily added to any image object 51 to facilitate sorting out the image object 51.

Addition of attribute information to an image object in each of the above processes is performed by dragging and dropping a relevant icon onto the object 51. Thus, when a plurality of image objects are displayed on the display picture, especially when a plurality of image objects of the same type to which the same attribute information can be added with high probability are displayed, the attribute information is easily added to the respective objects, advantageously.

### Reproduction mode process:

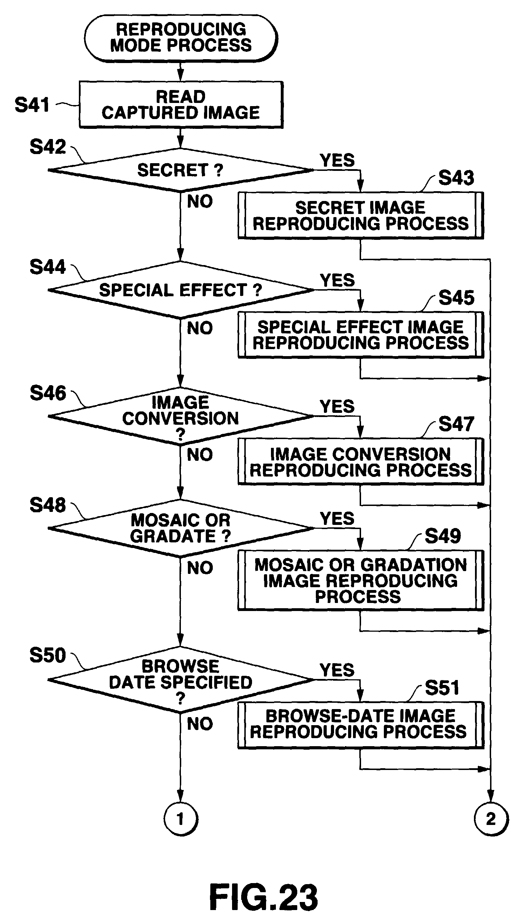

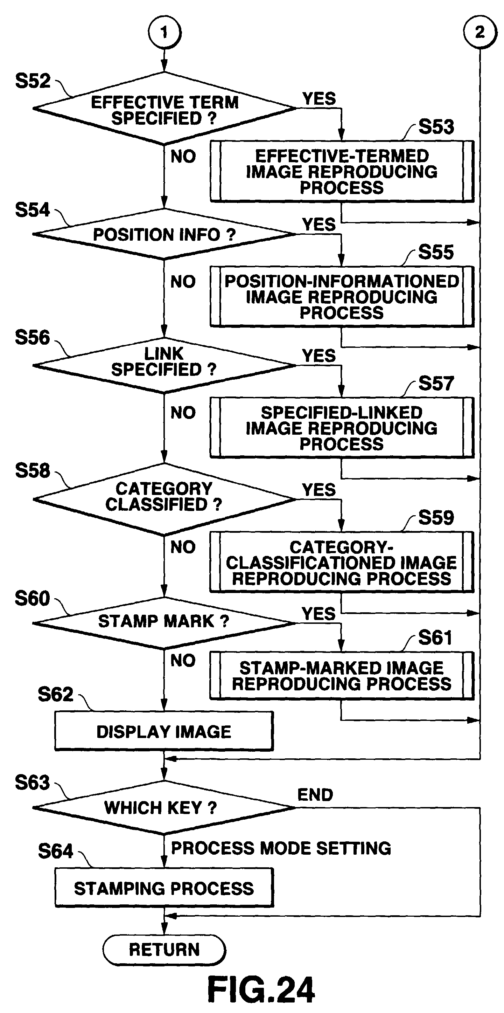

FIGS. 23 and 24 are combined to provide a flowchart of a program indicative of a reproduction mode process performed by the control system 21 of the electronic still camera 1. This program may be performed by another information processing device, which is required to have at least a function of reproducing the respective image objects 51. If each image object 51 is a JPEG-type image file and not subjected to processing or a change of attributes in the record mode process, this image file can be reproduced by a personal computer, work station or portable information terminal on which a general-purpose OS such as, for example, Windows 95/98/NT/CE (registered trademark) is installed. Thus, the personal computer, work station and portable information terminal correspond to the information processing devices. Another electronic still camera capable of acquiring a JPEG-type image externally and displaying it on its monitor display also corresponds to the information processing device. A printer which acquires a JPEG-type image file externally and outputs the contents of the image as a hard copy also corresponds to the information processing device, of course.

When the reproduction program starts in FIG. 23, first, in step S41 a captured image is read from the flash memory 39, expanded by the compressing/expanding system 20 (the expanded captured image is hereinafter referred to as an "image object") and displayed on the display 43. When this program is executed on the information processing device, the captured image and display 43 should be read as an image file and a display unit of the information processing device, respectively.

Stamp information (FIG. 8) added to the image object is then examined to determine which of the secret, special effect, image conversion 1, ..., and stamp mark processes was performed in the record mode process, and the control then branches to a reproducing process corresponding to the result of the determination.

The determining steps include steps S42, S44, S46, S48, S50, S52, S56, S58 and S60 in FIG. 23. The branching steps include steps S43, S45, S47, S49, S51, S53, S57, S59 and S61 in FIG. 23.

For example, when secret information is stored in the control information data section of the second field 73 for the stamp information, the control branches to the secret image reproducing process in step S43. When effect information is stored in the control information data section of the second field 73 for the stamp information, the control branches to the special effect image reproducing process in step S45.

Likewise, in step S46 when the image conversion (image conversion 1 or 2) is determined, the control branches to the image conversion reproducing process in step S47. In step S48 when the mosaic or gradation is determined, the control branches to the mosaic or gradation image reproducing process in step S49. In step S50 when the browse date specifying is determined, the control branches to the browse-dated image reproducing process in step S51. In step S52 when the effective term specifying is determined, the control branches to the effective-termed image reproducing process in step S53. In step S54 when the position information is determined, the control branches to the position informationed image reproducing process in step S55. In step S56 when it is determined that the link was specified, the control branches to the specified-linked image reproducing process in step S57. In step S58 when the category classification is determined, the control branches to the category-classificationed image reproducing process in step S59. In step S60 when the stamp mark is determined, the control branches to the stamp-marked image reproducing process in step S61.

When nothing is determined, it is then determined that the image object is a general one (for example, a JPEG-type image file) on which the respective individual processes in the record mode process are not performed. Then, in step S62 the image object is displayed on the display 43. After the respective reproducing processes in steps S53, S55, S57, S59 and S61 or the image displaying process in step S62 end, it is determined in step 63 what key operation was performed. When key operation for terminating the process was performed, the control immediately returns to step S2 of FIG. 3. When key operation for setting the processing mode was performed, a process similar to the stamp process (FIG. 5) performed in the record mode process, that is, a process is performed which comprises changing the display picture to the operation picture described in FIG. 6, displaying the captured image (image object) read in step S41 and the operation icons in the first and second areas 52 and 53, respectively, dragging and dropping a desired operation icon onto the image object (captured image) to add desired attribute control information to the image object, and the control then returns to step S2 of FIG. 3.

Now, the respective branching processes will be described next in more detail.

### Secret image reproducing process (step S43):

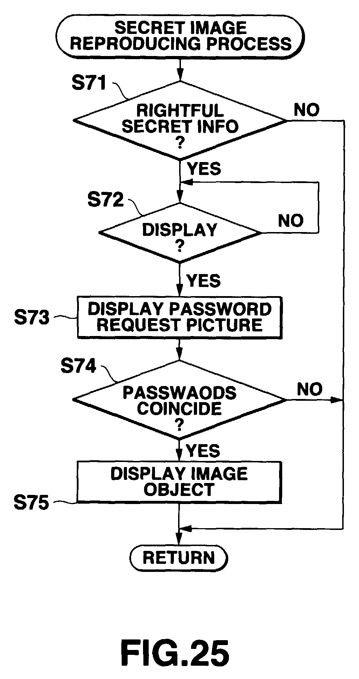

FIG. 25 is a flowchart of a program indicative of this process. When this program starts, first, in step S71 it is checked whether the information added to the image object is rightful secret information. If otherwise, the program is closed. If it is, in step S72 the control waits until a display event occurs.

The determination as to whether the added information is rightful secret information is performed by determining whether the aded information satisfies prescribed code conditions. The display event includes a touch on a predetermined key or on a displayed picture by the user (this applies to the subsequent cases).

When a display event occurs, in step S73 a password requesting picture is displayed. Then, in step S74 when a password is inputted, it is determined whether the inputted password coincides with a password hidden in the image object. If otherwise, the program is closed. If it does, the control passes to step S75 to display the image object and then to close the program.

Thus, according to this branching process, only when the password inputted in response to a request for input thereof is rightful, the image object is displayed.

### Special effect image reproducing process (step S45):

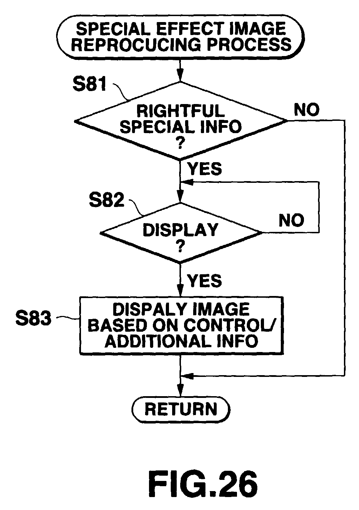

FIG. 26 is a flowchart of a program indicative of this process. When this program starts, first, in step S81 it is checked whether the information added to the image object is rightful special information. If otherwise, the program is closed. If it is, in step S82 the control waits until a display event occurs, at which time the control passes to step S83 to refer to control and additional information added to the image object to thereby display the image object on which an appropriate special process (flashing, spiraling or blinding, etc.) was performed, and then to close the program.

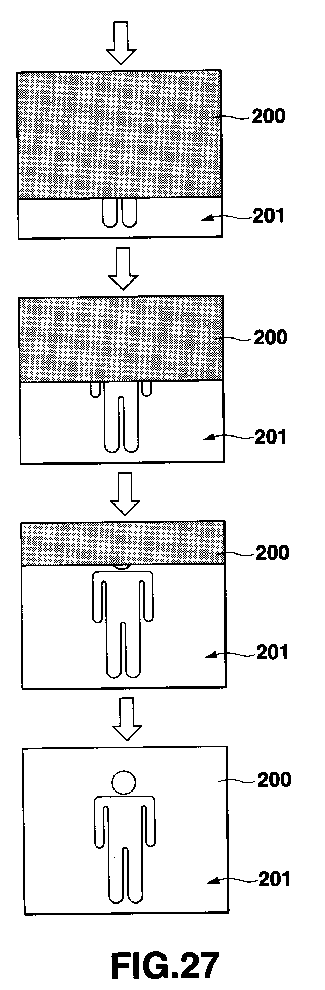

FIG. 27 illustrate a special effect called a slide in which a reproduced image 201 appears from down to up with time. The reproduced image may appear from up to down or from right to left, and vice versa.

Thus, according to this branching process, only by referring to the control and additional information added to the image object, an image object appropriately subjected to special processing is displayed.

### Image conversion reproducing process (step S47):

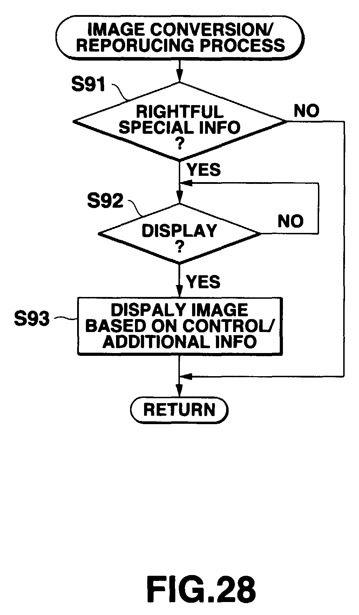

FIG. 28 is a flowchart of a program indicative of this process. When this program starts, first, in step S91 it is determined whether the information added to the image object is rightful image conversion information. If otherwise, the program is closed. If it is, in step S92 the control waits until a display event occurs, at which time the control passes to step S93 to refer to the control and additional information added to the image object to display the image object on which appropriate image conversion (cell rearranging puzzle in the case of the image conversion process 1; a change of the hue of the image object or a change of the color of the image object to sepia in the case of the image conversion process 2) was performed, and then to close the program.

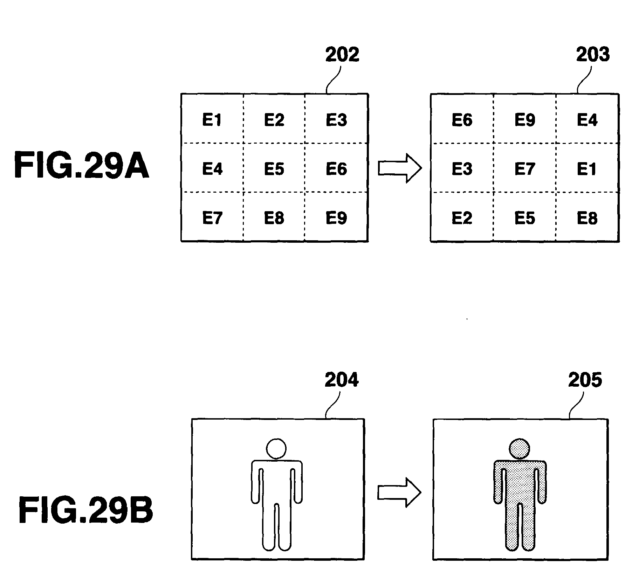

FIG. 29A illustrates a puzzle in which 9 picture cells E1-E9 into which a picture 202 is divided are randomly replaced, one with another, to form a specified array of the cells 203. FIG. 29B illustrates that an image object 204 with a character image is changed to a different one 205 with a sepia character image.

Thus, according to this branching process, only by referring to the control and additional information added to the image object, an image object where appropriate image conversion (the cell rearranging puzzle in the case of the image conversion process 1; a change of the hue of the image object to another and/or a change of the color of the image object to sepia in the case of the image conversion process 2) was performed is displayed.

### Mosaic or gradation image reproducing process (step S49):

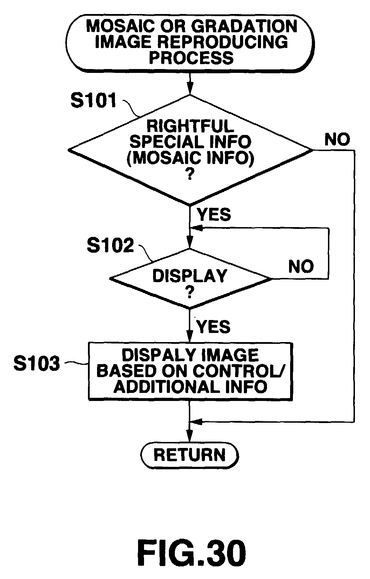

FIG. 30 is a flowchart of a program indicative of this process. When this program starts, first, in step S101 it is determined whether the information added to the image object is rightful control information (mosaic or gradation information). If otherwise, the program is closed. If it is, in step S102 the control waits until a display event occurs, at which time the control passes to step S103 to refer to the control and additional information added to the image object to display the image object on which a mosaic is formed or gradation is performed, and then to close the program.

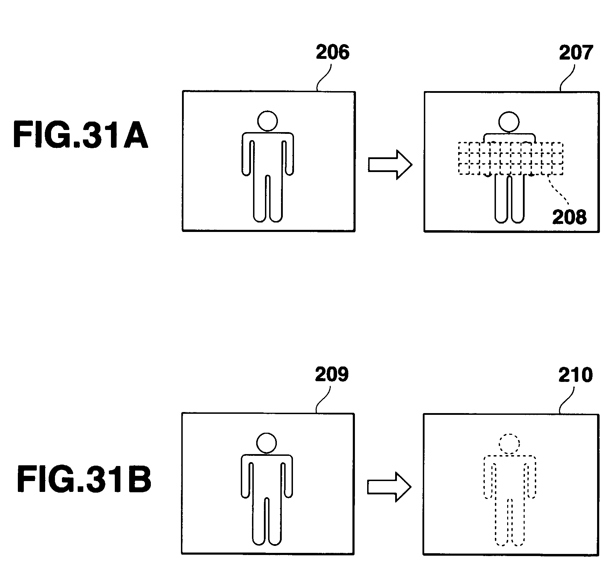

FIG. 31A illustrates that an image object 206 with a character is changed to an image object 207 where a mosaic is formed on the character. FIG. 31B illustrates that an image object file 209 with a character is changed to an image object file 210 with a gradated character.

Thus, according to this branching process, only by referring to the control and additional information added to the image object, an image object with a mosaic or gradation is displayed.

### Browse-dated image reproducing process (step S51):

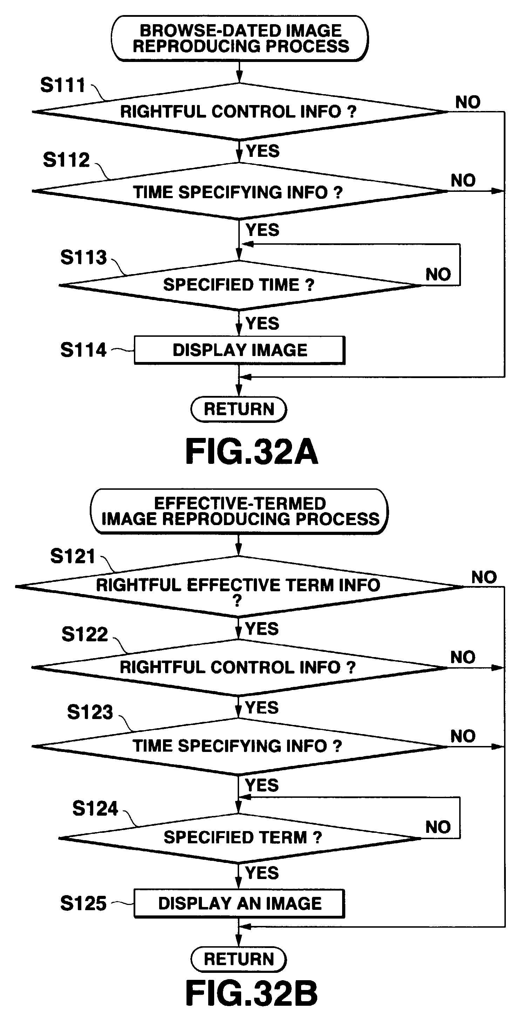

FIG. 32A is a flowchart of a program indicative of this process. When this program starts, first, in step S111 it is determined whether the information added to the image object is rightful control information. If otherwise, the program is closed. If it is, the control passes to step S112 to determine whether there is date/time specifying information.

If otherwise, the program is closed. If there is, in step S113 the control waits for arrival of the time and date, at which time in step S114 the image object is displayed and then the program is closed.

In step S113 if the present date is different from a specified date, the program may be closed temporarily.

Thus, according to this branching process, only by referring to the control and additional information added to the image object, the image object is not displayed until the specified date comes.

### Effective-termed image reproducing process (step S53):

FIG. 32B is a flowchart of a program indicative of this process. When this program starts, first, in step S121 it is determined whether the information added to the image object is rightful effective term information. If otherwise, the program is closed. If it is, the control passes to step S122 to determine whether the information is rightful control information.

If otherwise, the program is closed. If it is, in step S113 it is determined whether the control information includes date/time information. If otherwise, the program is closed. If it does, in step S124 the control waits until the date/time comes, at which time in step S125 the image object is displayed and then the program is closed.

When the present date is different from the specified one in step S124, the program may be closed temporarily.

Thus, according to this branching process, only by referring to the control and additional information added to the image object, the image object is not displayed excluding for the specified time.

### Position-informationed picture reproducing process (step S55):

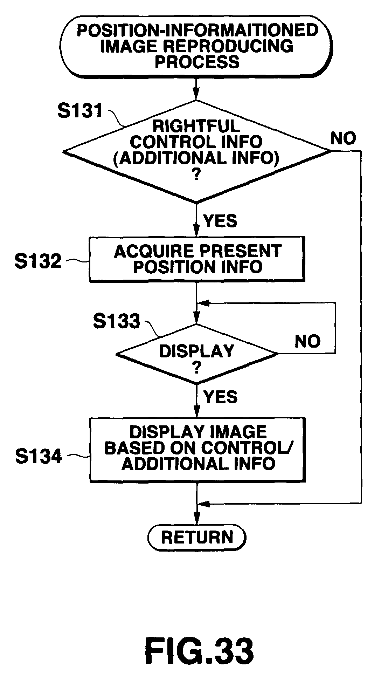

FIG. 33 is a flowchart of a program indicative of this process. When this program starts, first, in step S131 it is determined whether the information added to the image object is rightful control information. If otherwise, the program is closed. If it is, the control passes to step S132 to acquire present position information.

Then, in step S133 the control waits until a display event occurs, at which time the control passes to step S134 to refer to the control and additional information added to the image object, to display the image object with a message about the present position, and then to close the program.

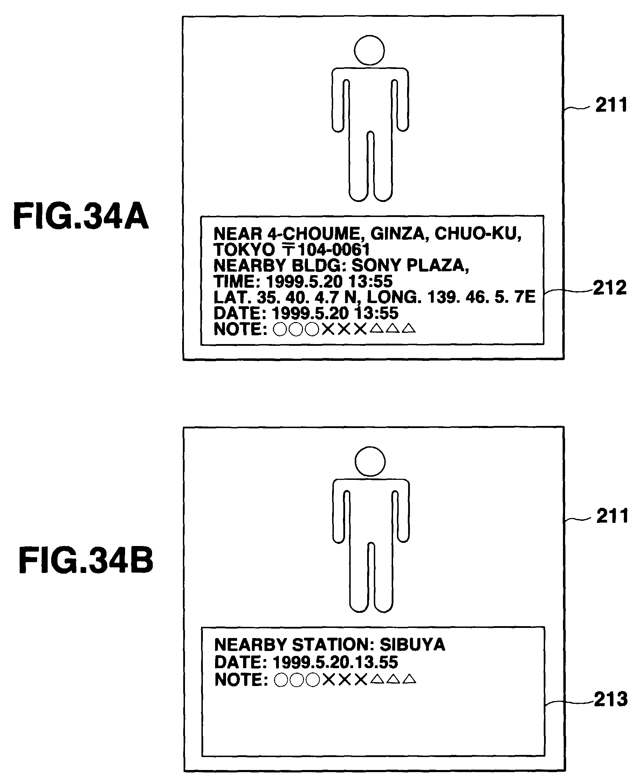

FIG. 34A illustrates a displayed image object 211 with a position information message 212 (whose contents are also shown in FIG. 18) obtained from the GPS information. FIG. 34B illustrates a displayed image object 211 with a position information message 213 (whose contents are also shown in FIG. 19) obtained from information on the cells of the PHS system.

Thus, according to this branching process, the message about the position information added to the image object is displayed along with the image object.

### Specified-linked image reproducing process (step S57):

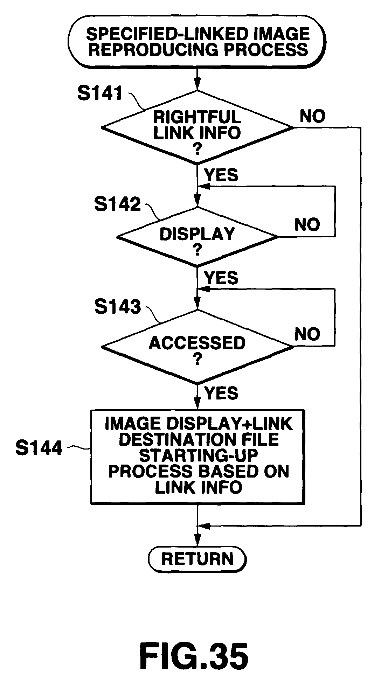

FIG. 35 is a flowchart of a program indicative of this process. When this program starts, first, in step S141 it is determined whether the information added to the image object is rightful link information. If otherwise, the program is closed. If it is, in step S142 the control waits until a display event occurs, at which time in step S143 the control waits until link information is accessed.

When the link information is accessed, the control passes to step S144 to display the image object, to download an object to be linked with, to perform a process depending on a type of this object, and then to close the program.

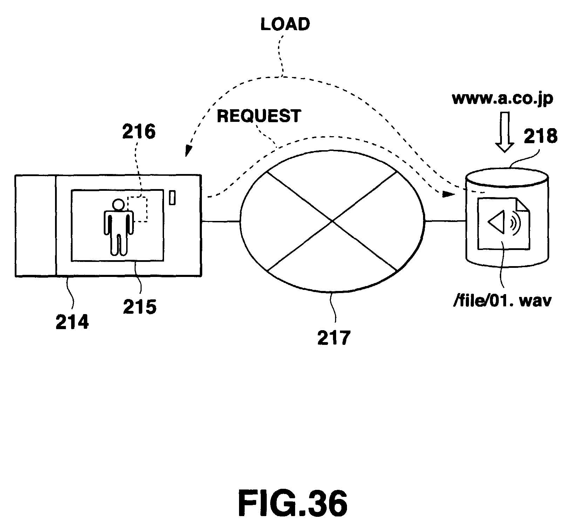

FIG. 36 schematically illustrates this link in which it is illustrated that a "link" icon 216 on a monitor picture 215 of the electronic still camera 214 is touched to download an object (in FIG. 36, a way file stored in a server 218 connected to the Internet 217) of a link destination registered in the link section 216.

The way file includes a file which contains voice (not limited to human voice) information. By opening the way file with corresponding tool software, the contents of the voice stored in the file are produced from a speaker (not shown). Thus, in this illustration a voice file with a name of 0.1.wav stored in a file directory of a server 218 of a www.co.jp domain can be downloaded on the still camera 214 and reproduced as it is if an executing environment of the way file is set in the still camera 214.

Thus, according to this branching process, an external object can be downloaded and displayed and a related sound is output based on the link information added to the image object.

### Category classificationed image reproducing process (step S59):

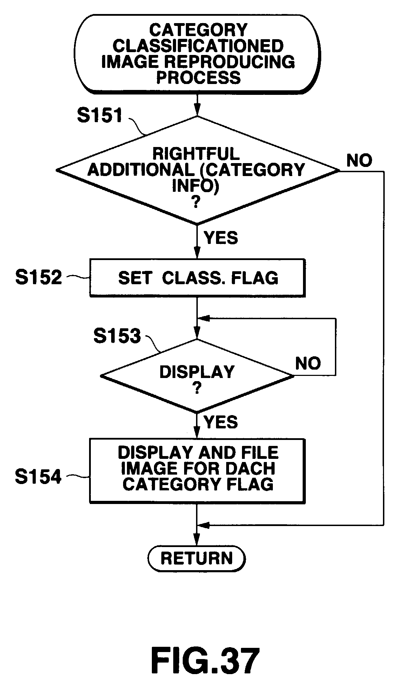

FIG. 37 is a flowchart of a program indicative of this process. When this program starts, first, in step S151 it is determined whether the information added to the image object is rightful additional information. If otherwise, the program is closed. If it is, in step S152 information representing a category classification (for example, a classification flag) is set.

In step S153 the control waits until a display event occurs, at which time the control passes to step S154 to display and store an image object for each category classification, and then to close the program.

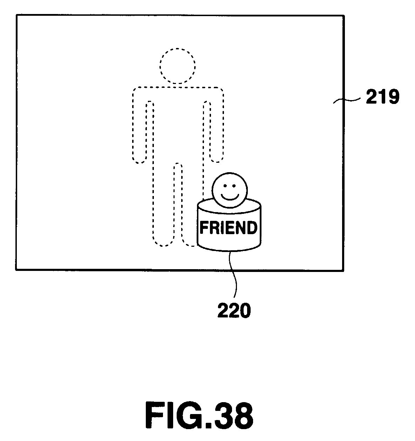

FIG. 38 illustrates an image object on which a section icon 220 representing a category classification is pasted visually. This picture corresponds to the fact that a check box 105 of FIG. 21 indicating the category classification process is checked off.

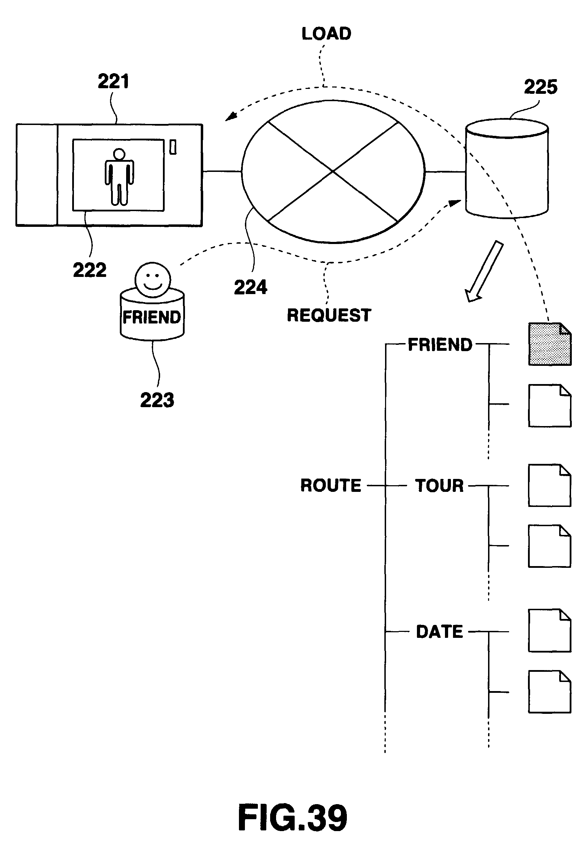

FIG. 39 illustrates display of an image object, using a section icon 223. In FIG. 39, it is illustrated that for example, by clicking a section icon 223 related to a "friend" directory of a server 225 connected to the network 224, an image object (a hatched document in FIG. 39) stored in the "friend" directory is downloaded on the still camera 221 and displayed on its monitor screen 222.

While this picture illustrates downloading the image object from the server 225 to the still camera 221, this applies to uploading. The category classification may be applicable to an object stored in a recording medium provided in the still camera 221.

Thus, according to this branching process, an image object is effectively managed based on the category classification information added to the image object.

### Stamp-marked image reproducing process (step S61):

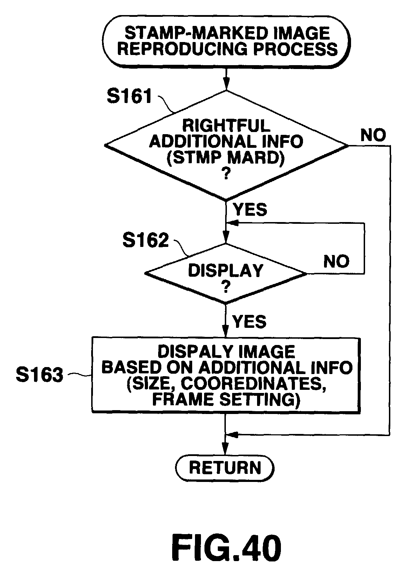

FIG. 40 is a flowchart of a program indicative of this process. When this program starts, first, in step S161 it is determined whether the information added to the image object is rightful additional information. If otherwise, the program is closed. If it is, in step S162 the control waits until a display event occurs, at which time the control passes to step S163 to set the size, position and number of stamp marks to be displayed or the presence/absence of a frame display, to display the image object along with the stamp marks, and then to close the program.

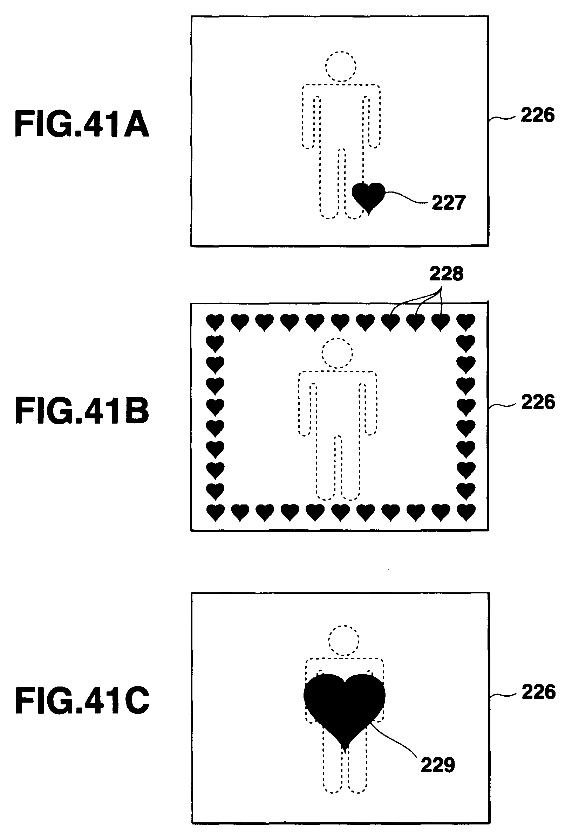

FIG. 41A illustrates an image object 226 with a heart-shaped stamp mark (corresponding to an icon 112 of FIG. 22) displayed at a foot of a character. FIG. 41B illustrates an image object 226 surrounded by smaller stamp marks 228 arranged along the periphery of the image file. FIG. 41C illustrates an image object 226 with a larger stamp mark at its central position.

Thus, according to this branching process, an appropriate stamp mark(s) can be displayed along with the image object based on the stamp mark information added to the image object.

In addition, a processing function may be selected depending on a position where a stamp mark is pasted on the image object. For example, (A) a password may be selected depending on whether a secret stamp mark is pasted at a right or left position on the image object (or the object display picture). (B) Stamp marks "friends 1, 2, 3, ..." each indicative of category classification may be selected depending on their respective (upper right or lower left) pasting positions. This applies to other functions likewise. For example, (C) an effect to be produced may be changed depending on a position where a special effect stamp is pasted; (D) the degree of difficulty and/or the number of divisions may be changed depending on a position where an image conversion 1 stamp is pasted; (E) a brightness, contrast or gamma value may be changed depending on a position where an image conversion 2 stamp is pasted; (F) a position where a mosaic is formed or a strength of the mosaic may be changed at a position where a mosaic stamp is pasted; (G) a degree of gradation may be changed at a position where a gradation stamp is pasted; (H) an effective term may be changed at a position where an effective term specifying stamp is pasted; (I) a type of position information to be added may be changed at a position where a position information stamp is pasted; (J) a linking destination may be changed at a position where a link specifying stamp is pasted; and (K) the number or size of stamp marks may be changed at a position where the stamp mark is pasted.

As described above, when a function is selected depending on the position of a stamp pasted on the image object, the relationship between the function and the position where the stamp is pasted is preferably displayed in the third area 54 of the operation picture 50.

While the embodiment is illustrated as being directed to the electronic still camera as an example, and the object is an image one (image file), the object may be a different object. In this case, the kinds of operation icons each displayed along with the object for stamp processing purposes are, of course, different from those displayed when the object is the image object. Thus, an operation icon displayed along with the displayed object is preferably selected automatically in correspondence to the displayed object by the control system comprising a CPU, for example.

## Claims

1. An object processing apparatus comprising:
a display device (43);
display control means (40) for displaying on the display device any particular object (51) and an icon (58-70) corresponding to control information to change attributes of the object; and
control information adding means (40, 44, 45) for adding control information to the object by relating the icon to the object on a display screen of the display device,

2. The object processing apparatus according to claim 1, wherein:
the display control means (40) comprises means for displaying on the display device a plurality of icons each allocated different control information; and wherein:
the control information adding means (40, 44, 45) relates a desired one of the plurality of icons to the object on the display screen of the display device to thereby add to the object control information corresponding to the desired icon.

3. The object processing apparatus according to claim 1 or 2, wherein:
the control information adding means (40, 44, 45) relates the icon to the object by dragging and dropping the icon onto the object.

4. The object processing apparatus according to claim 3, wherein:
the icon corresponds to a plurality of pieces of control information;
and
the control information adding means (40, 44, 45) selects one from the plurality of pieces of control information at a position where the icon is dropped on to the object and then adds the selected piece of control information to the object.

5. The object processing apparatus according to any one of claims 1-4, wherein:
the control information specifies a type or a mode in which the object is displayed.

6. The object processing apparatus according to any one of claims 1-4, wherein:
the control information specifies the conditions to enable the object to be displayed on said display device.

7. The object processing apparatus according to any one of claims 1-4, wherein:
the control information comprises information on a link with another object.

8. The object processing apparatus according to any one of claims 1-4, wherein:
the control information comprises information on a category classification of the object.

9. The object processing apparatus according to any one of claims 1-4, wherein:
the control information comprises information on a different image displayed along with the object.

10. An object attribute changing method comprising the steps of:
displaying any particular object and an icon corresponding to control information to change attributes of the object; and
adding the control information to the object by relating the icon to the object on a display screen,

11. The object attribute changing method according to claim 10, wherein:
there are a plurality of icons each allocated different control information, the plurality of icons being displayed along with the object; and comprising the step of:
relating a desired one of the plurality of icons to the object on the display screen to thereby add to the object control information corresponding to the desired icon.

12. The object attribute changing method according to claim 10 or 11, wherein:
the icon is related to the object by dragging and dropping the icon onto the object.

13. The object attribute changing method according to claim 12, wherein:
the icon corresponds to a plurality of pieces of control information; and
one of the plurality of pieces of control information is selected depending on a position where the icon is dropped onto object and the selected piece of control information is added to the object.

14. The object attribute changing method according to any one of claims 10-13, wherein:
the control information specifies a type or a mode in which the object is displayed.

15. The object attribute changing method according to any one of claims 10-13, wherein:
the control information specifies the conditions to enable the object to be displayed.
